(19)

Europäisches
Patentamt

European
Patent Office

Office européen
des brevets

(11) **EP 4 261 564 A1**

(12) **EUROPEAN PATENT APPLICATION**

(43) Date of publication:
**18.10.2023 Bulletin 2023/42**

(21) Application number: **23163678.8**

(22) Date of filing: **23.03.2023**

(51) International Patent Classification (IPC):
**G01S 7/35** $^{(2006.01)}$  **G01S 13/34** $^{(2006.01)}$
**G01S 13/58** $^{(2006.01)}$  **G01S 13/91** $^{(2006.01)}$
**G01S 13/933** $^{(2020.01)}$

(52) Cooperative Patent Classification (CPC):
**G01S 7/354; G01S 7/356; G01S 13/343;**
**G01S 13/345; G01S 13/584; G01S 13/91;**
**G01S 13/933**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.04.2022 US 202263362869 P**
**05.12.2022 US 202218061894**

(71) Applicant: **Honeywell International Inc.**
**Charlotte, NC 28202 (US)**

(72) Inventors:
• **SIRITEANU, Constantin**
**Charlotte, 28202 (US)**
• **LUKAS, Jan**
**Charlotte, 28202 (US)**

(74) Representative: **Haseltine Lake Kempner LLP**
**Cheapside House**
**138 Cheapside**
**London EC2V 6BJ (GB)**

(54) **UNAMBIGUOUS AND ACCURATE VELOCITY ESTIMATION BY FREQUENCY-MODULATED RADARS**

(57)  A radar system with transmitting circuitry to generate a frequency-modulated output that includes an up-chirp and a down-chirp. The radar system includes receiving circuitry configured to: receive radar returns from a target, calculate a first frequency difference based on the up-chirps and calculate a second frequency difference based on the down-chirps. The radar system calculates an unambiguous but coarse estimate of the Doppler frequency shift corresponding to the target radial velocity relative to the radar from the first and second frequency differences. The system also calculates a fine but ambiguous estimate of the Doppler frequency shift by using multiple chirps either from the same triangular waveform or from a separate waveform. The system calculates an unambiguous and accurate Doppler frequency shift estimate for the target by combining the unambiguous but coarse estimate of the Doppler frequency shift and the fine but ambiguous estimate of the Doppler frequency shift.

FIG. 3

$$\frac{1}{T} \le PRF \quad or \quad T \ge \frac{1}{PRF}$$

EP 4 261 564 A1

**Description**

This application claims priority to U.S. Patent Application 18/061,894 filed 5 December 2022, which claims the benefit of U.S. Provisional Patent Application No. 63/362,869 filed 12 April 2022, the entire contents of each being incorporated herein by reference.

**TECHNICAL FIELD**

The disclosure relates to radar systems, and, more particularly, to frequency-modulated radar systems.

**BACKGROUND**

Doppler-capable radar, and other systems, may estimate the velocity of a target by measuring a change in the frequency between the transmitted signal and the reflected signal to calculate the Doppler frequency shift, $f_D$. Radar systems may compensate for this change in frequency for a moving target when estimating the range to a target. A radar may transmit a waveform with repetitive pulses, e.g., chirps, for frequency-modulated radars, characterized by a pulse-repetition frequency. Chirps with increasing signal frequency are referred to as up-chirps. Chirps with decreasing signal frequency are referred to as down-chirps. A sawtooth waveform may consist of either up-chirps or down-chirps. A triangular waveform may consist of pairs of up-chirps and down-chirps.

The radar may calculate the target velocity based on the Doppler frequency shift estimated from a succession of pulses of the same type, e.g., either up-chirps or down-chirps (i.e., all chirps from a sawtooth waveform, or chirps of same type from a triangular waveform), which are characterized by a pulse-repetition frequency.

Linearly frequency-modulated radars, and other systems, may also determine range to a target from a frequency difference, e.g., if a transmitted signal is modulated linearly with increasing frequency, a signal received from a target will have a smaller frequency than the radar is currently transmitting, and the difference between the frequency of the currently transmitted and received signals is constant, due to linearity, and proportional to target range. If a transmitted signal is modulated linearly with decreasing frequency, a signal received from a target will have a higher frequency than the radar is currently transmitting and the difference between the frequency of a currently transmitted and received signals is again constant, due to linearity, and proportional to target range.

Linearly frequency-modulated signal may be reflected by a moving target, and then the resulting Doppler frequency shift induced by target motion will add to the frequency of the reflected signal, regardless of signal modulation. Therefore, if linearly frequency-modulated radars, and other systems, transmit at least one up-chirp followed by one down-chirp, and both signals are reflected by the same target, the difference of the transmitted and received frequencies will no longer indicate solely the target range, but will also include the Doppler frequency shift due to target velocity. Since the Doppler frequency shift is added to the frequency of the reflected signal regardless of its modulation, it enters the frequency difference between the currently transmitted signal and the reflected signal similarly for up-chirp and down-chirp.

Thus, linearly frequency-modulated radars, and other systems, may identify reflections from one or more targets in the received signal. They may also perform matching for targets identified in reflections of signal modulated linearly with increasing frequency with targets identified in reflections of signal modulated linearly with decreasing frequency, and then determine the target Doppler frequency shift from the frequency differences between the currently transmitted and received signals for both signal modulations (up-chirp and down-chirp).

In some examples, radar processing circuitry may use for frequency estimation the Fourier transform, most often, but not limited to, its efficient discrete implementation known as the fast Fourier transform (FFT). When radar circuitry processes one or more chirps over duration $T$, the Fourier transform applied to each chirp or its various combinations - for example, but not limited to, averaging - is typically called the range or first Fourier transform (hereafter denoted as FFT1).

In the case of linearly frequency-modulated radars, radar circuitry may mix (i.e., multiply then filter) the received signal with the transmitted signal, and, after applying FFT1, its magnitude and phase represent the reflected signal. For a given time $t_0$, corresponding to range $r_0$, FFT1($t_0$) refers to the FFT1 sample or bin.

The linearly frequency-modulated radar system may transmit and process multiple chirps, e.g., $N$ chirps, conventionally of the same type (as for sawtooth waveform), but, in some examples, they may be of different types (as for triangular waveform), with some compensation applied. The processing circuitry may also apply additional processing to each chirp as needed. The processing circuitry may further form a sequence of values FFT1($t_0$, $n$), where $n$ is an index of each chirp among multiple chirps, $n = 1, 2, ..., N$. The processing circuitry may further perform a fast Fourier transform on values FFT1($t_0$, 1), FFT1($t_0$, 2), ..., FFT1($t_0$, $N$), which is typically called the Doppler or second Fourier transform (hereafter denoted as FFT2). The processing circuitry may further calculate the second Fourier transform (FFT2) for a specific value of $t_0$ (i.e., FFT1 range bin), selected set of values $t_0$, or for all possible values of $t_0$.

SUMMARY

In general, the disclosure describes techniques to estimate unambiguously and accurately the Doppler frequency shift and the corresponding target velocity. Radar systems, including pulsed radars, frequency-modulated continuous wave (FMCW) radars, and similar radar systems may output transmitted signals with a pulse-repetition frequency. Radar systems may accurately estimate Doppler frequency shifts for targets moving relative to the transmitter, when the target velocity corresponds to a Doppler frequency shift within the interval $[-\frac{1}{2}, \frac{1}{2})$ times the pulse-repetition frequency. When the velocity of the target corresponds to a Doppler frequency shift outside this unambiguous frequency interval, the resulting frequency estimate is aliased into the interval. Radars may increase the pulse-repetition frequency to widen the unambiguous frequency interval, but, as the pulse-repetition frequency becomes larger, other radar functions may be negatively affected.

This disclosure describes two approaches to resolve the ambiguity in estimating the Doppler frequency shift for high-velocity targets. Each approach entails techniques to estimate the Doppler frequency shift, $f_D$, unambiguously and accurately within a frequency interval of length corresponding to the relevant pulse-repetition frequency. Both approaches include transmitting successive pairs of up-chirps and down-chirps. These chirps are processed by some technique that estimates a difference between transmitted and received frequency, an example of such technique may be FFT1 processing. The first approach includes the transmission of a triangular waveform and both its FFT1 and FFT2 processing. The second approach includes the transmission of a triangular waveform and its FFT1 processing as well as of an additional sawtooth or triangular waveform and the FFT2 processing of some or all of its chirps; for the second approach, the product between the chirp processing duration for the first waveform and the same-pulse-repetition frequency for the second waveform is set greater than 1.

The receiving circuitry determines the presence of targets using both subsets of chirps (e.g., the up-chirp and down-chirp of the triangular waveform) independently, matches detected targets, and then calculates a coarse but unambiguous estimate for the Doppler frequency shift, $f_D$. The first approach, using a single triangular waveform, is to perform an averaging (possibly enhanced by interpolation) on two or more reflected received radar signals to increase the accuracy of the coarse but unambiguous estimate for the Doppler frequency shift, $f_D$. In this first approach, the processing circuitry also uses all or a subset of up-chirps and/or down-chirps of the triangular waveform to calculate a highly accurate, i.e., fine, but ambiguous, estimate for the Doppler frequency shift. When the coarse estimate is combined with the fine estimate, the receiver circuitry may unambiguously and accurately calculate the Doppler frequency shift, and, then the target velocity.

The second approach, using two waveforms, includes transmitting a combination of increasing and decreasing linearly modulated chirps (i.e., one triangular waveform) to obtain a coarse but unambiguous estimate of the Doppler frequency shift; the accuracy of such coarse estimate may be limited to $1/T$, where T is the sampled (processed) duration of a single up-chirp or down-chirp. The second approach further includes transmitting a second, sawtooth or triangular, waveform with a certain pulse-repetition frequency (PRF). This second waveform may have linear modulation or some other type of modulation, as long as the modulation is consistent throughout this second waveform. Then, combining the coarse but unambiguous Doppler frequency shift estimate from the first, triangular, waveform with chirp processing duration $T$, with the fine but ambiguous Doppler frequency shift estimate from the second (sawtooth, triangular or other) waveform characterized by PRF yields unambiguous and accurate Doppler frequency shift estimate under the condition that the *PRF* multiplied by *T* is more than 1, i.e., *PRF\*T > 1*, which may also be written *PRF · T > 1*. Thus, in the second approach, the chirps for the second waveform are necessarily shorter than for the first waveform.

In one example, this disclosure describes a radar system comprising radar transmitting circuitry configured to generate a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; radar receiving circuitry configured to: receive radar returns comprising the frequency-modulated output reflected from a target; process the received radar returns, wherein to process the received radar returns comprises: calculate a first frequency difference based on one or more first received radar returns comprising one or more pairs of transmitted and reflected up-chirps; calculate a second frequency difference based on one or more second received radar returns comprising one or more pairs of transmitted and reflected down-chirps; compare the first frequency difference to the second frequency difference; calculate an unambiguous but coarse estimate of a Doppler frequency shift associated with the target based on the first frequency difference and the second frequency difference; calculate a fine but ambiguous estimate of the Doppler frequency shift associated with the target; calculate a resolved Doppler frequency shift associated with the target by combining the unambiguous but coarse estimate of the Doppler frequency shift associated with the target and the fine but ambiguous estimate of the Doppler frequency shift associated with the target; calculate the target velocity relative to the radar system based on the resolved Doppler frequency shift associated with the target.

In another example, this disclosure describes a method comprising generating, by radar transmitting circuitry of a radar system, a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; receiving, by receiving circuitry of the radar system, radar returns comprising calculating a first frequency difference based on one or more first received radar returns comprising one or more pairs of transmitted and reflected up-chirps; and calculating a second frequency difference based on one or more second received radar returns comprising one or more pairs of transmitted and reflected down-chirps; comparing the first frequency difference to the second frequency difference; calculating an unambiguous but coarse estimate of a Doppler frequency shift associated with the target based on the result of the above comparison; calculating a fine but ambiguous estimate of the Doppler frequency shift associated with the target; calculating a resolved Doppler frequency shift associated with the target by combining the unambiguous but coarse estimate of the Doppler frequency shift associated with the target and the fine but ambiguous estimate of the Doppler frequency shift associated with the target; calculating the target velocity relative to the radar system based on the resolved Doppler frequency shift associated with the target.

In another example, this disclosure describes a non-transitory computer-readable storage medium comprising instructions that, when executed, cause one or more processors of a computing device to: control transmitting circuitry of a radar system to generate a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; control receiving circuitry of the radar system to receive radar returns comprising the frequency-modulated output reflected from a target; process the received radar returns to resolve Doppler ambiguity in the received radar returns, wherein resolving the Doppler ambiguity comprises: calculate a first frequency difference based on one or more first received radar returns comprising one or more pairs of transmitted and reflected up-chirps; calculate a second frequency difference based on one or more second received radar returns comprising one or more pairs of transmitted and reflected down-chirps; compare the first frequency difference to the second frequency difference; calculate an unambiguous but coarse estimate of a Doppler frequency shift associated with the target based on the first frequency difference and the second frequency difference; calculate a fine but ambiguous estimate of the Doppler frequency shift associated with the target; calculate a resolved Doppler frequency shift associated with the target by combining the unambiguous but coarse estimate of the Doppler frequency shift associated with the target and the fine but ambiguous estimate of the Doppler frequency shift associated with the target; calculate the target velocity relative to the radar system based on the resolved Doppler frequency shift associated with the target.

The details of one or more examples of this disclosure are set forth in the accompanying drawings and the description below. Other features, objects, and advantages of the disclosure will be apparent from the description and drawings, and from the claims.

## BRIEF DESCRIPTION OF DRAWINGS

FIG. 1 is a conceptual diagram illustrating an example frequency-modulated radar system.

FIG. 2A is a time graph illustrating an example amplitude of a frequency-modulated signal.

FIG. 2B is a graph illustrating the variation in time of the frequency of a frequency-modulated signal.

FIG. 3 is a time graph illustrating the two-waveform approach to estimating the Doppler frequency shift.

FIG. 4 is a block diagram illustrating an example radar system in accordance with one or more techniques of this disclosure.

FIG. 5A are plots of the coarse but unambiguous frequency (relevant for FFT1 processing) and the fine but aliased frequency (relevant for FFT2 processing), when the estimate-combining condition does not hold, as for the single-waveform approach.

FIG. 5B are plots of the true frequency as well as the frequency obtained by combining the coarse but unambiguous frequency (relevant for FFT1 processing) and the fine but aliased frequency (relevant for FFT2 processing), when the estimate-combining condition does not hold, as for the single-waveform approach.

FIG. 5C are plots of the coarse but unambiguous frequency (relevant for FFT1 processing) and the fine but aliased frequency (relevant for FFT2 processing), when the estimate-combining condition holds, as may be the case for a two-waveform approach.

FIG. 5D are plots of the true frequency as well as the frequency obtained by combining the coarse but unambiguous frequency (relevant for FFT1 processing) and the fine but aliased frequency (relevant for FFT2 processing), when the estimate-combining condition holds, as may be the case for a two-waveform approach.

FIG. 6A is a time graph illustrating the true target velocity as well as the coarse velocity estimate, the fine velocity estimate, and the combined velocity estimate, for the single-waveform (triangular) and illustrates the benefit of frequency interpolation.

FIG. 6B is a time graph illustrating, for the two-waveform approach, when the estimate-combining condition holds, the true target velocity as well as the coarse velocity estimate, the fine velocity estimate, and the combined velocity estimate.

FIGS. 7A and 7B are a flow diagrams illustrating an example operation of a radar system of this disclosure.

## DETAILED DESCRIPTION

A radar system of this disclosure may use one or both of two approaches to unambiguously calculate the Doppler frequency associated with a reflected return from a target. The techniques of this disclosure may avoid complications in determining Doppler frequency. For example, a radar may calculate target velocity based on the Doppler frequency shift estimated from a succession of pulses of the same type, e.g., either up-chirps or down-chirps (i.e., all chirps from a sawtooth waveform, or chirps of same type from a triangular waveform), which are characterized by a pulse-repetition frequency. However, the radar system may estimate unambiguously only target Doppler frequency shifts that fall within the interval (-½, ½] times that pulse-repetition frequency. Consequently, the velocity of a fast target may correspond to a Doppler frequency shift outside this interval, e.g., especially for fast moving targets, and then, the target velocity estimate is also aliased into the corresponding velocity interval, as explained by the Nyquist-Shannon sampling theorem. In this case, the Doppler frequency shift and its corresponding velocity may not be unambiguously reconstructed. In some examples, an unambiguous velocity estimate for such fast targets may be obtained by using a sufficiently high pulse-repetition frequency, but such high pulse-repetition frequencies may have disadvantages.

For linearly frequency-modulated radars, the accuracy and resolution of the Doppler frequency shift, $f_D$, estimated by the triangular-waveform-based approach may be limited by either system design limitations or by physical limitations arising from the sampling (or processing) duration T of the used pulse, e.g., chirp. Because this sampling duration $T$ is smaller than the total chirp duration, and because the triangular waveform period is, at least, the total duration of a pair of chirps, the processing duration Tis smaller than half of the same-pulse-repetition period (i.e., the triangle repetition period). Then, signal detection theory states that the frequency estimation accuracy or resolution achieved by this approach (i.e., $1/T$) is larger than twice the same-pulse-repetition frequency (i.e., the triangle repetition frequency), so that any ensuing frequency estimate is coarse, e.g., less accurate.

While frequency estimation based on FFT-magnitude peak detection may be used in some cases (e.g., digital signal processing), there may be other means - for example, but not limited to, Doppler filter banks - that do not bear these limitations and could also be used when applying the techniques of this disclosure.

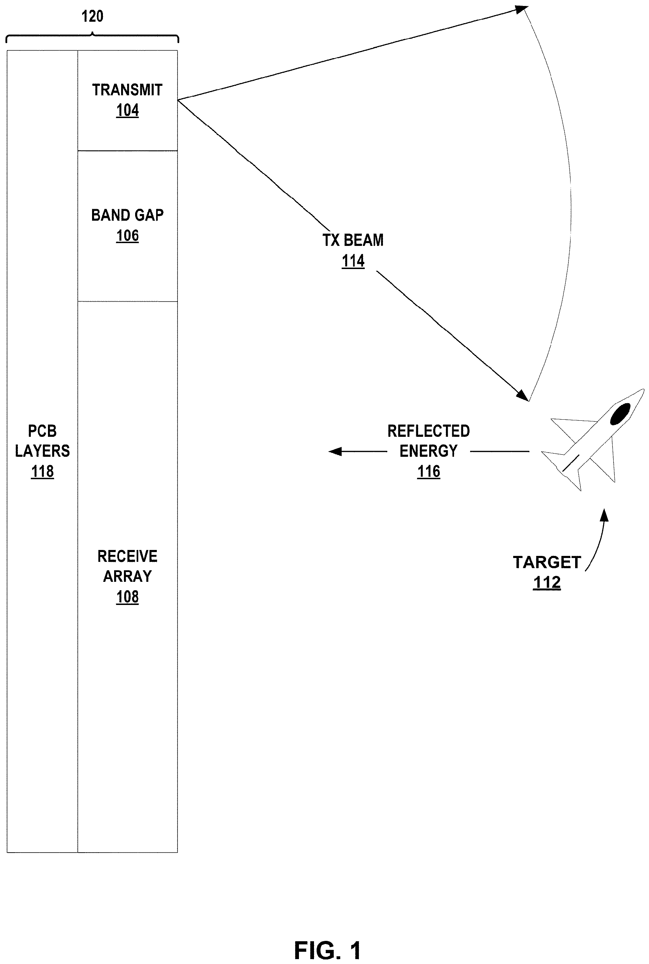

FIG. 1 is a conceptual diagram illustrating an example frequency-modulated radar system. In the example of FIG. 1, radar system 120 has an antenna assembly with transmit antenna 104, band gap 106, and receive array antenna 108. Band gap 106 may be configured to reduce or prevent energy from transmit antenna 104 from interfering with the function of receive array antenna 108. In some examples, radar system 120 may be an FMCW radar device. In other examples of this invention, different types of radar may be used, including but not limited to single antenna radars with mechanically scanned antennas.

Transmit antenna 104, band gap 106, receive array antenna 108 in the example of FIG. 1 are part of radar system 120 that may include additional printed circuit boards (PCB) and/or PCB layers 118 with other electronics, including power supply circuitry, signal processing circuitry and so on. In some examples, transmit antenna 104, band gap 106, receive array antenna 108 are implemented by one or more layers of a PCB. In some examples, transmit antenna 104, band gap 106, receive array antenna 108 may be one or more layers of a multi-layer circuitry board that includes the transmit electronics, receive electronics, one or more processors and other signal processing circuitry, including digital signal processing circuitry. In other examples, the other circuitry, e.g., signal processing circuitry, may be on circuit boards separate from PCB layers 118 (not shown in FIG. 1).

In operation, transmit antenna 104 may output radar signals, e.g., transmit beam 114, which may reflect off target 112. The reflected radar signals 116 from target 112 may arrive at receive array antenna 108. Receive array antenna 108 may be configured to receive reflected radar signals 116, also described as radar returns 116, from target 112 and conduct radar returns 116 to receiving circuitry, e.g., located on PCB layers 118. Receiving circuitry (not shown in FIG. 1) may include filter circuits, amplifier circuits, mixer circuits, phase-shifting circuits, and other circuits to process received returns 116, as described herein.

In some examples, transmitting circuitry, e.g., located on PCB layers 118, may be configured to generate a frequency-modulated output, amplify the output, and transmit the output as transmit beam 114, via transmit antenna 104. In some examples, the transmitting circuitry may be configured to generate more than one type of output. In other examples, the transmitting circuitry may generate a single type of output, such as a triangular waveform that includes sets of linearly modulated chirps with one chirp increasing and another chirp in the set decreasing in frequency. In some examples, the decreasing portion may decrease at the same linear rate. In other examples, the decreasing portion may decrease at different linear rate than the increasing portion.

The receiving circuitry may perform averaging of frequency estimates over several pairs of up-chirps and down-chirps to calculate the coarse estimate for the Doppler frequency shift, $f_D$. The receiving circuitry may also apply averaging over pairs of up-chirps and down-chirps (triangles) possibly jointly with one or more of many different types of frequency-domain interpolation techniques to received radar returns to increase the accuracy of the coarse estimate for the Doppler frequency shift, $f_D$, for target 112. Examples of interpolation techniques may include Macleod interpolation, Lagrange interpolation, and other techniques. As described above, a chirp with an increasing signal frequency is referred to as an up-chirp and a chirp with decreasing signal frequency is referred to as a down-chirp chirp in this disclosure. In some examples, an up-chirp is a signal with a frequency that linearly increases over a first duration, while a down-chirp may be a signal with a frequency that linearly decreases over a second duration. In other examples the increase, or decrease may be non-linear.

In other examples, the transmitting circuitry may transmit a first linearly modulated triangular waveform (i.e., a sequence of pairs of up- chirps and down-chirps), or waveform 1, as described above, as well as a second sequence of chirps (either as sawtooth or triangular waveform), or waveform 2, either before or after the first triangular waveform. For the first (triangular) waveform, the duration of the processed or sampled portion of the signal chirp (either up-chirp or down-chirp) is denoted with T. The second sequence of chirps may include chirps with any one of a variety of modulation schemes. In some examples, the second sequence of chirps may be non-linear modulated chirps, linear up-chirps, e.g., chirps whose frequency linearly increases over the chirp, linear down-chirps, e.g., chirps whose frequency linearly decreases over the chirp, i.e., a sawtooth waveform, or another triangular waveform.

Then, the transmitting circuitry of this disclosure is configured so that the chirp processing duration T of waveform 1 and the pulse repetition frequency of waveform 2, denoted hereafter with PRF, satisfy the condition *PRF\*T > 1*. The triangular waveform 1, with each up-chirp and down-chirp having a processed duration T, may provide an unambiguous estimate for the Doppler frequency shift, and, therefore, an unambiguous estimate for the target velocity in real time. On the other hand, the accuracy and resolution of this estimate is *1/T*; because *1/T* is typically large, this estimate is typically coarse. This Doppler frequency shift estimate is herein referred to as the coarse estimate of the Doppler frequency shift and is denoted with $f_{D,c}$. The radar system of this disclosure may then combine this unambiguous but coarse estimate of the Doppler frequency shift with a high-resolution, i.e., fine, but ambiguous, estimate, denoted hereafter with $f_{D,f}$, obtained based on waveform 2 whose pulse-repetition frequency satisfies the condition *PRF\*T > 1*. This may result in an unambiguous and fine estimate for the Doppler frequency shift and, therefore, for the target velocity. Note that, hereafter, the variable name *PRF* denotes the pulse-repetition frequency of the waveform employed to calculate the fine Doppler frequency shift estimate by FFT2. This waveform can be either waveform 1 (triangular) or waveform 2 (sawtooth, triangular or some other arbitrary waveform).

An example method for combining the obtained coarse but unambiguous Doppler frequency shift estimate and the fine but ambiguous Doppler frequency shift estimate to obtain the Doppler frequency shift may include using the following equation:

$$f_D = f_{D,f} + round\left[\frac{f_{D,c} - f_{D,f}}{PRF}\right] * PRF \qquad [1]$$

where:

$f_{D,c}$ = coarse estimate, obtained by FFT1 processing of the triangular waveform 1 (interpolation around FFT1 peaks and averaging over triangles may also be used to improve the accuracy of the coarse estimate beyond 1/Z, where T is the duration over which samples are taken from waveform 1 chirps for FFT1-based frequency estimation).

$f_{D,f}$ = fine estimate, obtained by FFT2 processing of waveform 2 (when available; otherwise, the fine estimate is obtained by FFT2 processing of chirps from the single triangular waveform).

*PRF* = pulse repetition frequency for waveform 2 (when available; in general, *PRF* from the estimate-combining equation [1] is the pulse-repetition frequency of the waveform processed with FFT2 to obtain the fine Doppler frequency shift estimate).

As mentioned above, when two waveforms are used, in order to ensure successful combining of the coarse and fine estimates with equation [1], the pulse-repetition frequency for waveform 2, *PRF*, should be greater than *1/T*, i.e., combining the estimates as in equation [1] may yield an accurate and unambiguous estimate for the Doppler frequency shift when

$$PRF *T> 1. \qquad [2]$$

The processing circuitry of radar system 120 may calculate the target velocity, v, of target 112 with the following equation, obtained from equation [1]:

$$v = \frac{\lambda f_D}{2} = v_c + round\left[\frac{v_c - v_f}{2v_{f,max}}\right] * 2v_{f,max}, \qquad [3]$$

where $\lambda$ is the carrier signal wavelength (set to 0.0122 m for numerical results shown herein), $v_c$ and $v_f$ are the coarse and fine velocity estimates, respectively, obtained from the coarse and fine Doppler frequency shift estimates described above, and $v_{f,max} = \frac{\lambda \cdot PRF}{4}$ is the maximum velocity unambiguously measurable with the waveform used to obtain the fine estimate with frequencies in the range of $(-\frac{1}{2}, \frac{1}{2}]PRF$. Radar system 120 may provide continuous updates, in real time, of the position and velocity of target 112 to the user of radar system 120. The user may by a human operator, or an automated system, such as a flight control system for a manned or unmanned aircraft (not shown in FIG. 1). The unambiguous velocity may aid collision avoidance, tracking or other functions for the user.

For the single-waveform approach, i.e., when only triangular waveform 1 is used, the processing circuitry of radar system 120 may calculate a coarse estimate of the Doppler frequency shift by applying FFT1 to either each of the pairs of up-chirp and down-chirp that make up the triangles of the waveform, or coherently integrate up-chirps and down-chirps for the triangles of the waveform, or non-coherently integrate up-chirps and down-chirps for the triangles of the waveform, as described above for the two-waveform approach. The processing circuitry may also apply averaging of the coarse estimate of the Doppler frequency shift over several pairs of up-chirps and down-chirps, thus increasing the accuracy of the coarse Doppler frequency shift estimate. The processing circuitry may also apply frequency-domain interpolation to the output of FFT1, thus increasing the accuracy of the coarse Doppler frequency shift estimate. The processing circuitry may then calculate a fine Doppler frequency shift estimate by applying FFT2 to a number of up-chirps of the (single) triangular waveform. The processing circuitry may also apply FFT2 to a number of down-chirps of the (single) triangular waveform. In some examples, the processing circuitry may also combine the two fine Doppler frequency shift estimates obtained from FFT2 for the up-chirps and down-chirps of the (single) triangular waveform. In some examples, the processing circuitry may apply FFT2 to a sequence of chirps containing both up-chirps and down-chirps.

Note that throughout this disclosure, reference to FFT1 and FFT2 is simply one example of determining a frequency estimate. In other examples, radar systems may not apply digital signal processing, such as FFT1 and FFT2, but instead may apply analog frequency estimation. In other examples, analog radar systems may estimate frequency or frequency difference using alternative means, e.g. analog filter banks.

For the two-waveform approach, when *PRF * T*> 1, a single up-chirp and down-chirp pair (i.e., single triangle) from triangular waveform 1 along with a plurality of chirps (up-chirps and/or down-chirps or other) from (sawtooth or triangular or other) waveform 2 may be sufficient to obtain, respectively, coarse and fine estimates of the Doppler frequency shift that, when combined by using equation [1], yield an unambiguous and accurate Doppler frequency shift estimate.

In order for the combining equation [1] to yield unambiguous and accurate Doppler frequency shift estimate, the single-waveform approach may use, unlike the two-waveform approach, two or more up-chirp and down-chirp pairs (triangles) to calculate (in some examples by averaging, possibly jointly with interpolation around the FFT1-magnitude peaks) a coarse but unambiguous estimate of the Doppler frequency shift. In other examples, the processing circuitry of the system may use interpolation without averaging, may perform calculations using other measures of central tendency (e.g., median or mode) or may calculate the coarse, unambiguous estimate by combining the two or more up-chirp and down-chirp pairs by some other calculation technique.

For the single triangular waveform approach, condition *PRF*T* > 1 for successful Doppler frequency shift estimate combining cannot be satisfied because the processing duration, *T*, of either the up-chirps or the down-chirps used for frequency estimation based on FFT1 processing is then inherently smaller than the inverse of the pulse-repetition frequency. Nevertheless, as mentioned above, the radar processing circuitry may circumvent this limitation by applying averaging of the coarse Doppler frequency shift estimate, which is otherwise limited to an accuracy and resolution of *1/T*, over multiple pairs of up-chirps and down-chirps (triangles). The radar processing circuitry may also circumvent this limitation by applying frequency-domain interpolation around FFT1-magnitude peaks. Such averaging and interpolation may enhance the estimate accuracy and resolution significantly below $1/T$, so that condition $PRF^*T > 1$, for successful coarse and fine Doppler frequency shift estimate combining is virtually satisfied.

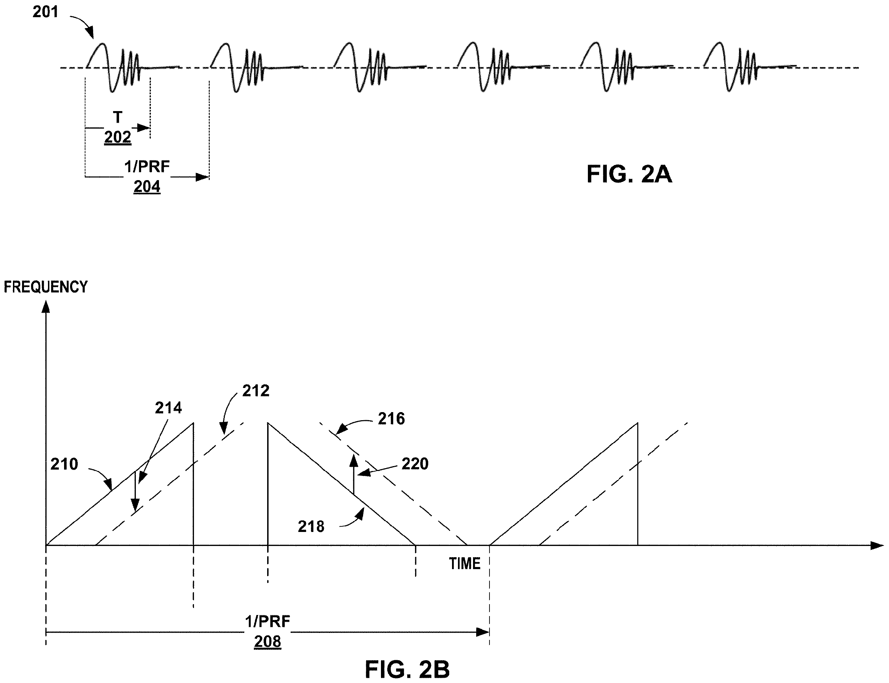

FIG. 2A is a time graph illustrating an example amplitude of a frequency-modulated output signal. The example chirp 201 of FIG. 2A is similar to an up-chirp described above in relation to FIG. 1, in which the frequency increases from the beginning of the chirp, and samples of the chirp signals are taken for the duration T 202, for processing. Note that the chirp processing or sampling duration $T$ 202 is inherently smaller than the entire chirp duration. The example of FIG. 2A also depicts the period from the beginning of chirp 201 to the beginning of the subsequent chirp, which is given by the inverse of the pulse-repetition frequency 204. This pulse-repetition frequency is denoted with $PRF$ for the waveform used for FFT2 processing to obtain the fine Doppler shift estimate.

FIG. 2B is a graph illustrating the frequency variation with time for an example frequency-modulated signal. Up-chirp 210 is a signal with a frequency that linearly increases over the chirp duration. Down-chirp 218 is a signal with a frequency that linearly decreases over the chirp duration. In the example of FIG. 2B, the up-chirp and down-chirp may have the same duration. FIG. 2B depicts a delay between the end of chirp 210 and the beginning of chirp 218. However, in some examples, the pair of up-chirp 210 and down-chirp 218 may be considered a pair, and then, the waveform is triangular (each up-chirp and down-chirp pair forms a triangle). The up-chirp 210 of FIG. 2B may correspond to up-chirp 201 in FIG. 2A, for the example in which chirp 201 has a linearly increasing frequency.

Transmit beam 114 depicted in FIG. 1 may include both chirp 210 and chirp 218 of FIG. 2B. Reflected energy 116, described above in relation to FIG. 1, may be considered a radar return that includes both reflected radar return 212 and reflected radar return 216 of FIG. 2B. The frequency difference 214 and 220 of FIG. 2B indicates the range to target 112 of FIG. 1. Receiving circuitry of radar system 120, described above in relation to FIG. 1, may be configured to receive reflected radar returns 116 with the frequency-modulated output (chirps 210 and 218) reflected from target 112 of FIG. 1 via receive array 108 of FIG. 1. Reflected radar returns 116, shown in FIG 1, may include the reflected radar energy 212 and 216 reflected from target 112. The frequency difference 214 between the output chirp 210 and reflected return 212 may indicate the range to target 112. Similarly, frequency difference 220 between the output chirp 218 and reflected return 216 may indicate the range to target 112.

Whereas the frequency shift between the transmitted and received chirps caused by target range may be either positive for the up-chirp 210 or negative for the down-chirp 218, the sign of the Doppler frequency shift $f_D$ is the same for both. Therefore, given the frequency difference $\Delta f$ (between the transmitted and received chirps, 214 and 220) indicative of target range, if the target moves relative to the radar device, e.g., the radar system 120 of FIG. 1, the measured frequency difference for the *up-chirp* is $f_{up} = \Delta f - f_D$, and for the down-chirp is $f_{down} = -\Delta f - f_D$. Then, *it* is useful to transmit both up-chirps and down-chirps, or pulses with both ascending and descending frequency modulation, detect targets, and estimate $f_D$ using both $f_{down}$ and $f_{up}$, as described above in relation to FIG. 1. Because the accuracy of this first Doppler frequency shift estimate is $1/T$, i.e., usually a less accurate estimate, this first estimate is referred to as "coarse." On the other hand, this first Doppler frequency shift estimate can safely be deemed unambiguous because its maximum value may be sufficiently large. The maximum value limit is the maximum frequency processable by hardware of a radar and therefore may depend on the particular radar system and vary from system to system.

As described above in relation to FIG.1, in some examples, signal processing circuitry, e.g., on PCB 118, may employ averaging of the coarse Doppler frequency shift estimate over several pairs of up-chirps and down-chirps (triangles) to bring the accuracy to a value significantly below $1/T$. In other examples, the processing circuitry may employ coherent or non-coherent integration of multiple chirps to obtain the coarse Doppler frequency. In some examples, the processing circuitry may also employ interpolation to bring the accuracy of the first, coarse, estimate of the Doppler frequency shift to a value significantly below $1/T$.

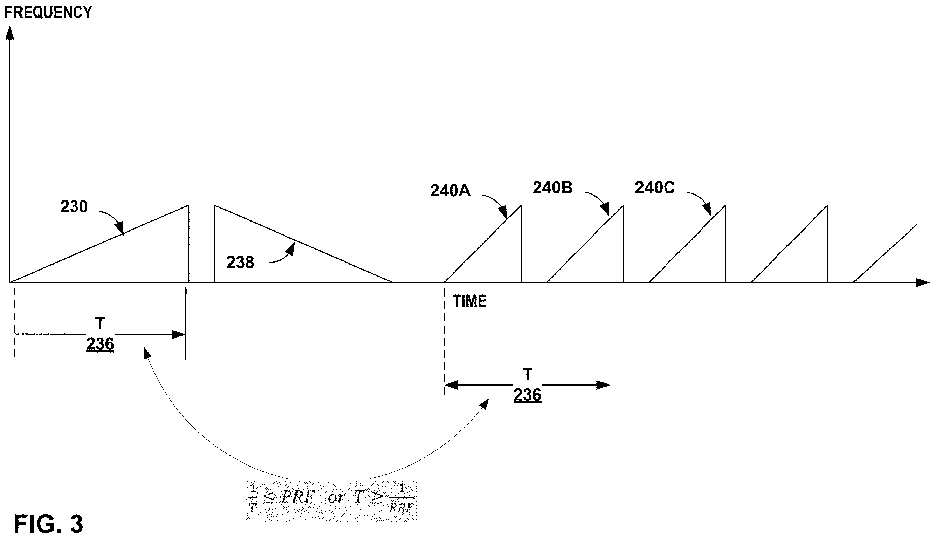

FIG. 3 is a graph illustrating an example two-waveform approach to estimate the Doppler frequency shift. The example of FIG. 3 includes a first waveform, which includes up-chirp 230 and down-chirp 238. This first waveform is processed with FFT1 to obtain the coarse Doppler frequency shift estimate. FIG. 3 also includes a second waveform, depicted in FIG. 3 as a sequence of linear up-chirps 240A, 240B, 240C, and so on. In other examples, the second waveform may also be implemented as a sequence of down-chirps, pairs of up-chirps and down-chirps (i.e., triangles), non-linear chirps, and other similar implementations, where the sequence of chirps 240A, 240B, 240C (collectively, signal 240) are all of the same type, e.g., have the same modulation scheme, period, and other characteristics; in some cases, combinations of chirps may be used. The second waveform may be processed with FFT2 (FFT1 also should be applied prior to FFT2) to obtain the fine but ambiguous Doppler frequency shift estimate. In other examples, the second waveform might be processed by different means than FFT2, for example but not limited to Doppler filter banks.

Similar to the example of FIG. 2B, chirp 230 is an up-chirp, i.e., a signal with frequency that linearly increases over the sampled duration T 236 of chirp 230. Chirp 238 is a down-chirp, i.e., a signal with frequency that linearly decreases. The pulse-repetition frequency of the plurality of chirps of signal 240, which is denoted herein with $PRF$, is then set larger than $1/T$ where $T$ is the sampled duration of chirp 230. In other words, the inverse of the $PRF$ is set smaller than $T$ 236.

As with FIG. 2B, FIG. 3 depicts a delay between the end of chirp 230 and the beginning of chirp 238. However, in some examples, the up-chirp 230 and down-chirp 238 may be considered together, as for triangular waveform 1 described above in relation to FIG. 1.

In the example of FIG. 3, the first waveform includes a single up-chirp 230 and a single down-chirp 238, followed by the sequence of chirps 240 for the second waveform. However, this is just one possible example implementation. In other examples, the radar system of this disclosure may output two or more pairs of up-chirps and down-chirps, e.g., a sequence of up-chirp 230 and down-chirp 238 as the first waveform. Also, the radar system may transmit the sequence of chirps 240 before the one or more first waveforms (230 and 238), which is not shown in FIG. 3, or after the one or more first waveforms, as shown in FIG. 3.

In operation, the processing circuitry for the radar system of this disclosure may calculate a first frequency difference 214 in FIG. 2B based on one or more first received radar returns from one or more pairs of transmitted 210 and reflected 212 signals with the frequency that linearly increases (up-chirps). The processing circuitry may calculate a second frequency difference 220 in FIG. 2B based on one or more second received radar returns from one or more pairs of transmitted 218 and reflected 216 signals with the frequency that linearly decreases (down-chirps).

The processing circuitry may compare the first frequency difference 214 in FIG. 2B to the second frequency difference 220 in FIG. 2B to estimate the coarse Doppler frequency shift by using both $f_{down}$ and $f_{up}$ as described above in relation to FIG. 2B, such as by averaging $-f_{down}$ and $-f_{up}$. In some examples, when transmitting pairs of chirps from the first waveform (230 and 238), the processing circuitry may perform other comparisons to determine an estimate of $f_D$, i.e., the coarse, but unambiguous, estimate described above in relation to FIGS. 1 and 2B. For example, for a Doppler frequency shift that is increasing or decreasing over the sequence of first waveforms, the processing circuitry may select a maximum or minimum value for the coarse estimate of the Doppler frequency shift or select a median value, rather than computing the average. In some examples, the processing circuitry may perform an FFT1 on the radar return from the one or more transmitted up-chirps 230 and FFT1 on the radar return from the one or more transmitted down-chirps 238, as described above in relation to FIG. 1. Then, the coarse Doppler frequency shift estimate obtained from each pair of chirps can be averaged to increase the accuracy of the estimate. Additionally, frequency-domain interpolation can be applied around the FFT1-magnitude peaks to increase the accuracy of the coarse Doppler frequency shift estimate.

The processing circuitry may additionally calculate a fine, but ambiguous, estimate of the target velocity based on the sequence of chirps 240 of FIG. 3. Although shown as a sequence of linear up-chirps in the example of FIG. 3, the sequence of chirps 240 may be implemented with other types of modulation schemes. For example, as described above in relation to FIG. 1, the second sequence of chirps 240 may also be non-linear modulated chirps, linear down-chirps, linear triangular waveform, and other modulation schemes. The processing circuitry may perform FFT2 on the radar return to signals 240 or other processing yielding the fine Doppler frequency estimate. The unambiguous but coarse estimate from the first waveform (230 and 238) obtained as discussed above, and the fine but ambiguous estimate from the second waveform (240) may be combined with equation [1] to obtain an unambiguous and fine estimate for the Doppler frequency shift, and, correspondingly, an unambiguous and fine estimate for the target velocity, as described above in relation to FIG. 1.

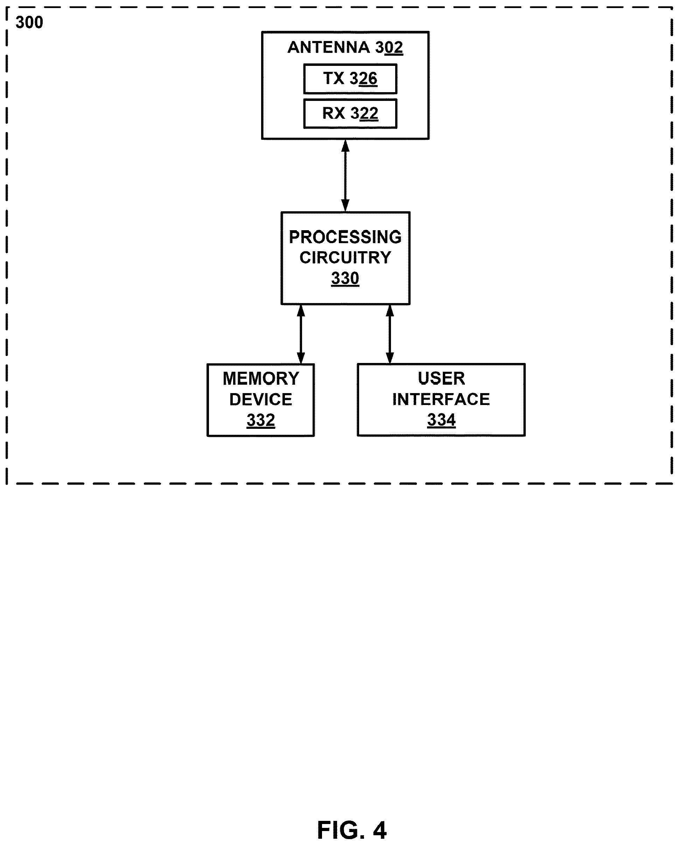

FIG. 4 is a block diagram illustrating an example radar system in accordance with one or more techniques of this disclosure. Example radar system 300 of FIG. 4 includes antenna 302, processing circuitry 330, memory device 332, and user interface 334. Radar system 300, antenna 302, transmit antenna (Tx 326), and receiving array antenna (Rx 322) correspond to radar system 120, transmit antenna 104, and receive array antenna 108 described above in relation to FIG. 1, and may have the same or similar functions and characteristics. In some examples, a single antenna for both transmit and receive may be used instead of transmit antenna (Tx 326) and receiving array antenna (Rx 322), including, but not limited to, an analog mechanically-scanned antenna.

Transmit antenna Tx 326 may output transmitted beam 114 as depicted in FIG. 1 above. Receive array Rx 322 may receive reflected energy 116 from target 112 as radar returns described above in relation to FIGS. 1, and 2B. Processing circuitry 330 may include radar transmitter electronics, radar receiver electronics, and other processing circuitry, including digital signal processing circuitry. Processing circuitry 330 may communicate with memory device 332. For example, processing circuitry 330 may execute software commands stored in memory device 332. Processing circuitry 330 may also store data, such as target information in memory device 332. Processing circuitry 330 may retrieve the data from memory device 332 for output via user interface 334 or to perform calculations or other signal processing, as described in this disclosure. In some examples, processing circuitry 330 may receive inputs from user interface 334 and display graphs, data, or other information on a display of user interface 334.

Processing circuitry 330 may determine the position of a detected target relative to radar system 300, such as a range and bearing (direction). For a target moving relative to radar system 300, processing circuitry 330 may obtain a coarse Doppler frequency shift estimate and a fine Doppler frequency shift estimate as described above in relation to FIGS. 1 - 2B. Processing circuitry 330 may calculate the target velocity by using either the single triangular waveform, e.g., by averaging over triangles and, possibly, by frequency-domain interpolation around the FFT1-magnitude peaks, or by using the two-waveform approach described above in relation to FIG. 1.

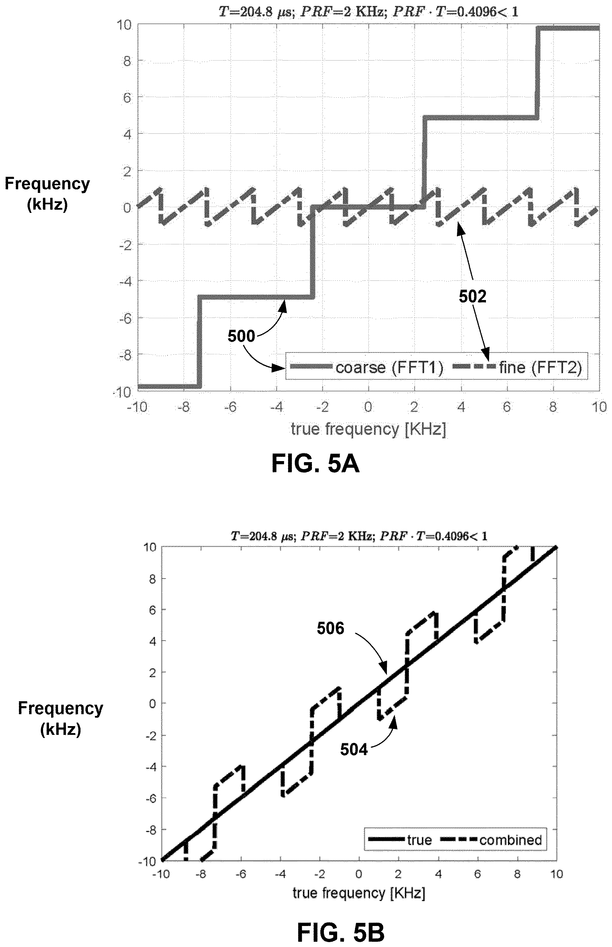

FIG. 5A are plots of the coarse but unambiguous frequency (relevant for FFT1 processing) and the fine but aliased frequency (relevant for FFT2 processing), when the estimate-combining condition does not hold, as for the single-waveform approach. FIG. 5A shows how the true (unaliased and unquantized) frequency is represented as the unambiguous but coarse frequency 500 (as for FFT1) and as the fine but aliased frequency 502 (as for FFT2), when the condition $PRF*T>1$ is not satisfied, which is the case of the approach using a single triangular waveform. The example depicted in FIG. 5A is specifically for the single-waveform approach. This example sets the chirp processing duration to T=204.8 microseconds (for either the up-chirp or the down-chirp), whereas the total chirp duration is 250 microseconds. Then, because the single triangular waveform is assumed to consist of successive pairs of up- and down-chirps, the pulse-repetition frequency for the same pulse/chirp type is $PRF$ = 1/(2 * 250 * 1e-6) Hz = 2 KHz. Consequently, $PRF * T=0.4096<1$, i.e., the estimate-combining condition from equation [2] is not satisfied. Again, a single waveform cannot not meet the condition $PRF * T > 1$, regardless of $T$ and total chirp duration.

FIG. 5B are plots of the true frequency as well as the frequency obtained by combining the coarse but unambiguous frequency (relevant for FFT1 processing) and the fine but aliased frequency (relevant for FFT2 processing), when the estimate-combining condition does not hold, as for the single-waveform approach. The example of FIG. 5B demonstrates that combining 504 the unambiguous but coarsely-quantized frequency with the finely-quantized but aliased frequency by using equation [1] does not help recover the true frequency 506. Nevertheless, as shall be demonstrated in other examples (not shown in FIG. 5B), unambiguous and fine estimation of the Doppler frequency shift from combining as in equation [1] its unambiguous but coarse estimate and its fine but ambiguous estimate, both obtained from the same (triangular) waveform, is still possible by further averaging (over several triangles) the coarse estimate and, possibly, by interpolating around the FFT1-magnitude peaks.

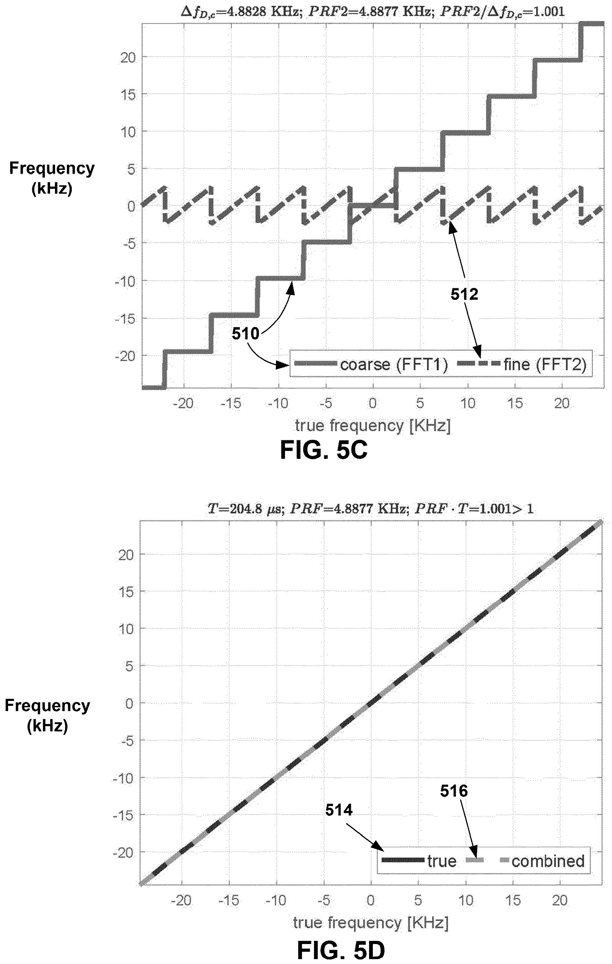

FIG. 5C are plots of the coarse but unambiguous frequency (relevant for FFT1 processing) and the fine but aliased frequency (relevant for FFT2 processing), when the estimate-combining condition holds, as may be the case for a two-waveform approach. FIG. 5C shows how the true (unambiguous and unquantized) frequency is represented as the unambiguous but coarsely-quantized frequency 510 and as the finely-quantized but aliased frequency 512, when the condition $PRF*T>1$ is satisfied, which may be the case when using two different waveforms. The example depicted in FIG. 5C set the chirp processing duration for waveform 1 to T=204.8 microseconds. For waveform 2, the pulse-repetition frequency for the same pulse/chirp type is set to $PRF$ = 4.8877 KHz. Consequently, we have $PRF * T=1.001>1$, i.e., the estimate combining condition from equation [2] is satisfied.

FIG. 5D are plots of the true frequency as well as the frequency obtained by combining the coarse but unambiguous frequency (relevant for FFT1 processing) and the fine but aliased frequency (relevant for FFT2 processing), when the estimate-combining condition holds, as may be the case for a two-waveform approach. The example of FIG. 5D reveals that combining 516 the unambiguous but coarsely-quantized frequency with the finely-quantized but aliased frequency by using equation [1] accurately recovers the true frequency 514. As shall be demonstrated, for the two-waveform case, when the two waveforms satisfy the condition $PRF * T > 1$, the system processing circuitry can achieve accurate estimation of the Doppler frequency shift from combining as in equation [1] its unambiguous but coarse estimate and its fine but ambiguous estimate. This holds even when the coarse estimate of the Doppler frequency shift is obtained from a waveform 1 that may include a single triangle, i.e., a single up-chirp/down-chirp pair. This can be interpreted as transmitting a beacon signal (the single triangle) that helps find the unambiguous estimate in an interval of relatively-large width $1/T$ (i.e., with poor accuracy), by FFT1 processing of the up-chirp and down-chirp. Then, FFT2 processing of the ensuing waveform 2, with pulse-repetition frequency $PRF$, which satisfies condition $PRF*T>1$, helps pinpoint the unambiguous estimate accurately within the mentioned interval.

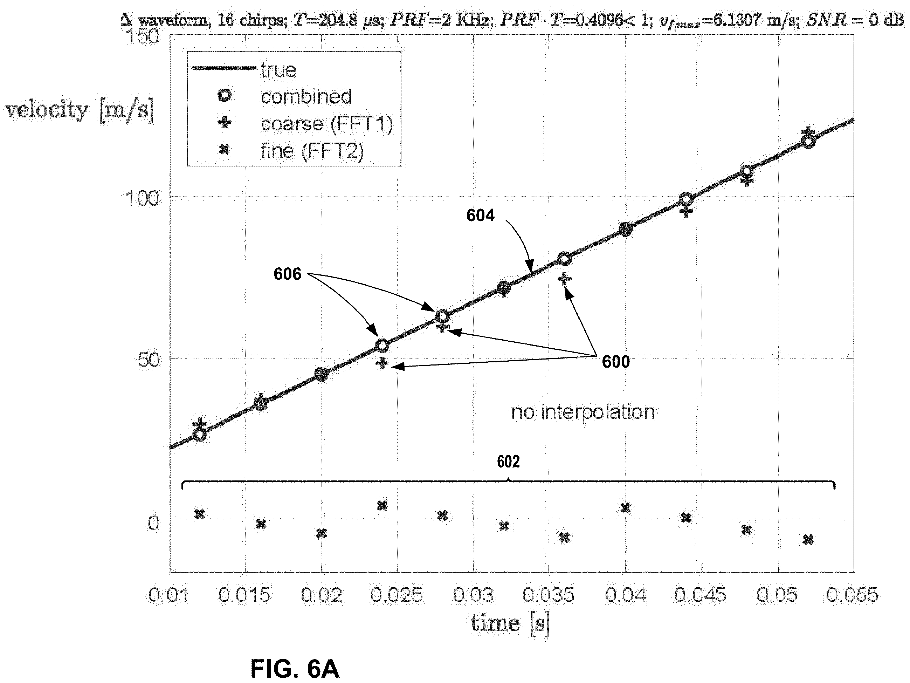

FIG. 6A is a time graph illustrating the true target velocity as well as the coarse velocity estimate, the fine velocity estimate, and the combined velocity estimate, for the single-waveform (triangular) illustrates the benefit of frequency interpolation. Note that the estimate-combining condition does not hold for the single waveform approach, but averaging and interpolation may improve the accuracy of the coarse frequency estimate. FIG. 6A depicts vs. time, for the single triangular waveform approach and time-domain signal-to-noise ratio $SNR=Q$ dB, the target velocity calculated by combining 606 with equation [3] the unambiguous but coarse velocity estimate 600 obtained from FFT1 processing and the fine but ambiguous velocity estimate 602 obtained from FFT2 processing. At each shown point, the estimation procedures employ N = 16 chirps of the triangular waveform (i.e., 8 triangles). In the example of FIG. 6A, the chirp processing duration is $T$ = 204.8 microseconds. The total chirp period is $T$ = 250 microseconds. Then, 1024 samples from the time-domain signal taken over duration T are used for FFT1 of size 1024, for both up-chirps and down-chirps. FFT1 processing of the up-chirps and the down-chirps, as discussed above, yields the unambiguous but coarse velocity estimate.

On the other hand, the system processing circuitry may implement size-16 FFT2 over the 8 up-chirps of the triangular waveform, which repeat with period 2*250 = 500 microseconds or $PRF$ = 2 KHz. Then, the maximum unambiguously measurable Doppler frequency shift is $PRF12-1$ KHz, i.e., low, and the accuracy (quantization interval) of the Doppler frequency shift estimate is $PRF/16=125$ Hz, i.e., high. Correspondingly, the maximum unambiguously measurable target velocity is $v_{f,max} = \lambda/2 * PRF/2=6.1307$ m/s, i.e., low, and the accuracy (quantization interval) of the velocity

estimate is $\Delta v_f = \lambda/2 * PRF/16 = 0.766$ m/s, i.e., high. Therefore, the FFT2-based estimate is fine but can be ambiguous.

For the shown numerical results, size-16 FFT2 processing is also implemented over the 8 down-chirps of the used triangular waveform. Thereafter, the fine Doppler frequency shift estimates from the up-chirps and down-chirps have been averaged. Note that $PRF*T$--$0.4096$, i.e., the condition in equation [2] is not satisfied, as expected, for this single-waveform case. Nevertheless, the example of FIG. 6A reveals that, although the coarse velocity estimate is inaccurate and the fine velocity estimate can be aliased, their combining with equation [3] yields an accurate estimate of the true velocity 604. This is because the coarse velocity estimate becomes sufficiently accurate by averaging over the 8 pairs of up-chirps and down-chirps. On the one hand, averaging the coarse velocity estimate over a larger number of triangles can improve the accuracy of this estimate so that combining with the fine velocity estimate may be no longer necessary. On the other hand, averaging the coarse velocity estimate over a smaller number of triangles may no longer lead to accurate velocity calculation by using equation [3] to combine the coarse and fine velocity estimates. Then, the system processing circuitry may be configured to use MacLeod interpolation or other method of interpolation (around the FFT1-magnitude peaks) to increase the accuracy of the coarse velocity estimate so that velocity-estimate combining with equation [3] still yields accurate results.

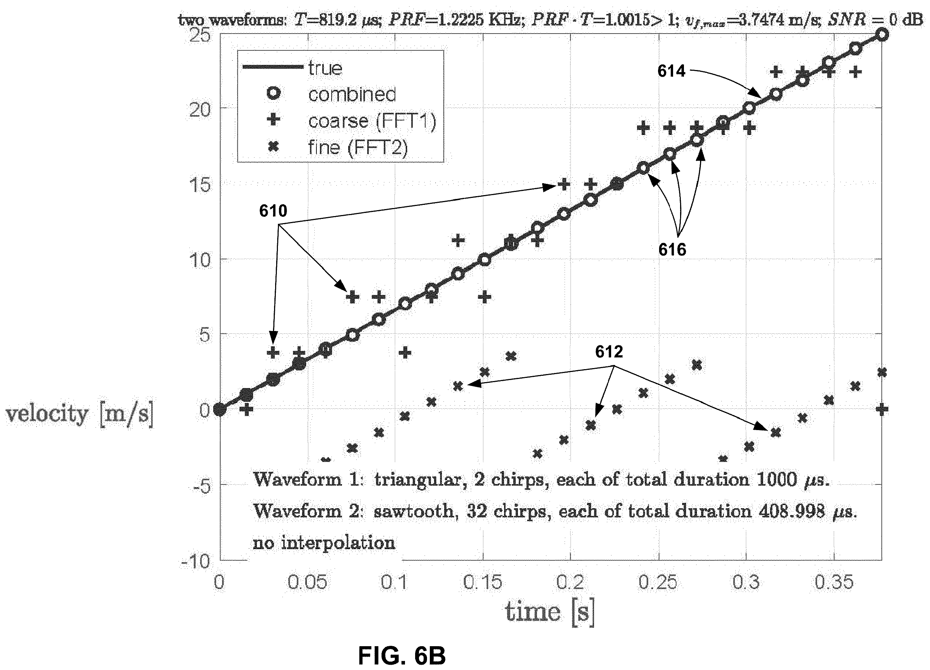

FIG. 6B is a time graph illustrating the true target velocity as well as the coarse velocity estimate, the fine velocity estimate, and the combined velocity estimate, for the two-waveform approach, when the estimate-combining condition holds. FIG. 6B depicts vs. time, for the two-waveform approach and time-domain signal-to-noise ratio SNR=0 dB, the target velocity calculated by combining 616 with equation [3] the unambiguous but coarse velocity estimate 610 obtained from FFT1 processing, and the ambiguous but fine velocity estimate 612 obtained from FFT2 processing. At each shown point, the FFT1-based estimation procedure employs only 2 chirps of the triangular waveform (a single triangle), i.e., there is no averaging of the coarse velocity estimate over triangles (unlike in Fig. 6A); each waveform-1 chirp has a total duration of 1000 microseconds, and 4096 samples are taken from it during duration T=819.2 microseconds for FFT1 of size 4096. On the other hand, FFT2 processing is implemented over 32 up-chirps that make up waveform 2 (sawtooth, transmitted after waveform 1 for this example; the sawtooth waveform can also be transmitted before the triangular waveform), each chirp having a total duration, and period, of 408.998 microseconds. Thus, the chirps of the second waveform have $PRF$ = 1.2225 KHz, and the corresponding maximum unambiguously measurable velocity is $v_{f,max}$ = 3.7474 m/s. Note that $PRF*T$=1.0015, i.e., the condition in equation [2] is satisfied for this two-waveform case. Then, FIG. 6B reveals that, although the coarse estimate can be inaccurate and the fine estimate can be aliased, their combining with equation [3] estimates accurately the true velocity 614.

As with FIGS. 5A, 5B, 5C, and 5D above, the selected values just illustrate example uses of the techniques of this disclosure. In other examples, a radar system may use any other values for the chirp periods, chirp processing duration $T$, $PRF$, frequency range, numbers of chirps, FFT1 and FFT2 sizes, and other parameters that are within the capability of the radar system.

As described above in relation to FIGS. 1 and 2B, the processing circuitry for the radar system may apply FFT1 to the chirps of the triangular waveform to determine a coarse, but unaliased, estimate of the Doppler frequency shift, and then calculate the estimated coarse target velocity 600. In other words, the processing circuitry may apply FFT1 to each available pair of up-chirps and down-chirps and compound the results, e.g., determine an average, median, or maximum, or some other value for all available chirps. The processing circuitry may also perform coherent or non-coherent integration of chirps before determining the coarse estimate of the Doppler frequency shift. In other examples, the processing circuitry may use different method than Fourier transform to determine the coarse frequency estimate, for example, but not limited to, analog frequency filter banks.

The processing circuitry may calculate a fine Doppler frequency shift estimate by applying FFT2 over available up-chirps, may calculate another fine Doppler frequency shift estimate by applying FFT2 over available down-chirps, then average the two estimates to calculate a fine estimate for the target velocity 602. In other examples, the processing circuitry may use different method than Fourier transform to obtain the fine Doppler frequency shift estimate, for example, but not limited to, analog frequency filter banks. The processing circuitry may also perform coherent or non-coherent integration of chirps before determining the fine estimate of the Doppler frequency shift. The processing circuitry may similarly compare the results, e.g., average or some other means of combining, of the available chirps, as described above, for example in relation to FIG. 1.

In other words, the processing circuitry is configured to calculate a first frequency difference based on one or more first received radar returns comprising one or more pairs of transmitted and reflected signals with the frequency that linearly increases. The processing circuitry is further configured to calculate a second frequency difference based on one or more second received radar returns comprising one or more pairs of transmitted and reflected signals with the frequency that linearly decreases. The processing circuitry for the radar system may then combine the first frequency difference and the second frequency difference to calculate an unambiguous but coarse estimate for the Doppler frequency shift associated with the target, and then calculate an unambiguous but coarse estimate of the target velocity. A fine but ambiguous estimate of the Doppler frequency shift and the corresponding fine but ambiguous estimate of the target velocity can also be obtained as described above. Finally, the processing circuitry may use the coarse and fine estimates to obtain an unambiguous and accurate Doppler frequency shift estimate by using equation [1] or to obtain an unambiguous and accurate target velocity estimate by using equation [3]. As shown in FIG. 6A, the combined results 606 align with the actual target velocity 604. As described above in relation to FIGS. 1, 2B, 3 and 5D, in some examples, the processing circuitry may also apply, after FFT1, in order to increase the accuracy of the coarse velocity estimate, an averaging over chirps or interpolation around the FFT1-magnitude peaks, using MacLeod interpolation or other interpolation methods.

Similar to FIG. 6A, and as described above in relation to FIGS. 1 and 2B, processing circuitry for the radar system may apply FFT1 to the triangular waveform chirps to calculate an unambiguous but coarse estimate of the Doppler frequency shift, and further calculate an unambiguous but coarse estimate of the target velocity 610. The processing circuitry is configured to calculate a first frequency difference based on one or more first received radar returns comprising one or more pairs of transmitted and reflected signals with the frequency that linearly increases. After that, before that, or in parallel with that, the processing circuitry is further configured to calculate a second frequency difference based on one or more second received radar returns comprising one or more pairs of transmitted and reflected signals with the frequency that linearly decreases. The processing circuitry for the radar system may then compare the first frequency difference to the second frequency difference, calculate the unambiguous but coarse estimate of the Doppler frequency shift associated with the target based on the first frequency difference and the second frequency difference and, finally, calculate the unambiguous but coarse target velocity estimate based on the unambiguous but coarse estimate of the Doppler frequency shift associated with the target.

A radar system with parallel processing may include two signal generators, one generating an up-chirp, and a second generator for generating a down-chirp. Such a system may delay the phase of one of the chirps, e.g., down-chirp by a set delay and add those two generated signals together. The parallel radar system may then be able to distinguish the signals apart in returns based on delayed phase.

The radar processing circuitry may also apply an FFT2 to calculate the fine Doppler frequency shift estimate using all same-type chirps of waveform 2. When waveform 2 is triangular, the fine velocity estimate from the up-chirps and the fine velocity estimate from the down-chirps can be combined (e.g., averaged) to yield the fine but ambiguous Doppler frequency shift estimate, and then the corresponding fine but ambiguous velocity estimate. Finally, the processing circuitry may use the coarse and fine estimates to obtain an unambiguous and accurate Doppler frequency shift estimate by using equation [1] or to obtain an unambiguous and accurate target velocity estimate by using equation [3].

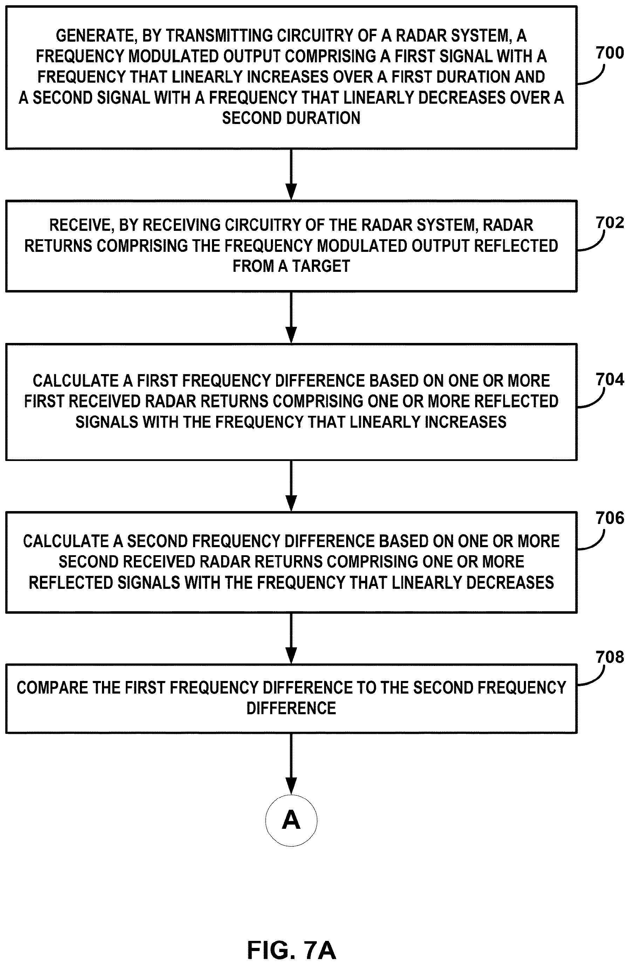

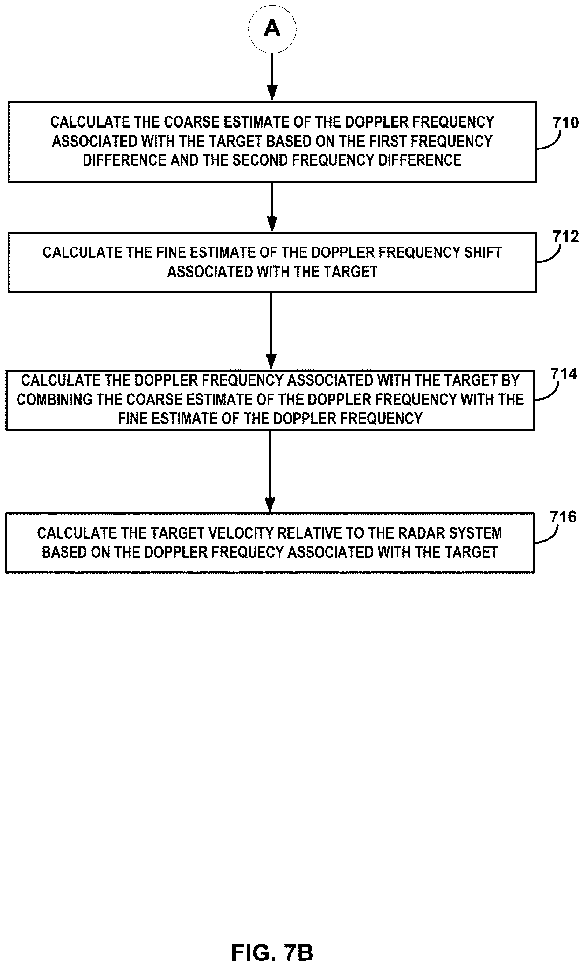

FIGS. 7A and 7B show a flow diagram illustrating an example operation of a radar system of this disclosure. As seen in the example of FIG. 4, processing circuitry, e.g., 330, may control transmitting circuitry of a radar system to generate a frequency-modulated output (700). The output may include a first signal with a frequency that linearly increases over a first duration, an up-chirp, and a second signal with a frequency that linearly decreases over a second duration, a down-chirp. In other examples, the output may include a first signal with a frequency that linearly decreases over a first duration and a second signal with a frequency that linearly increases over a second duration. In other examples, both signals might be encoded together in a single triangle waveform.

The processing circuitry may control the receiving circuitry of the radar system, to receive radar returns comprising the frequency-modulated output reflected from a target (702). Next, the processing circuitry may perform FFT1 on the received reflected up-chirp and calculate a first frequency difference based on one or more first received radar returns of one or more pairs of transmitted and reflected up-chirp, e.g., signals with the frequency that linearly increases (704).

The processing circuitry may perform and FFT1 on the received reflected down-chirp and calculate a second frequency difference based on one or more second received radar returns of one or more pairs of transmitted and reflected down-chirps, e.g., signals with the frequency that linearly decreases (706). In some examples, the processing circuitry may control the transmitting circuitry to transmit the down-chirps before transmitting the up-chirps. Similarly, the processing circuitry may control the receiving circuitry to calculate the second frequency difference for the down-chirps before the associated up-chirps. In other examples, the processing circuitry may transmit, and calculate the frequency differences for the up-chirps and down-chirps in parallel, as noted above. In other words, the processing circuitry may perform the down-chirp processing after, before or in parallel with the up-chirp transmission and processing. In other examples, the first signal and the second signal, e.g., an up-chirp and a down-chirp, may form a triangle waveform, as described above in relation to FIGS. 2B and 3.

The processing circuitry may compare the first frequency difference to the second frequency difference (708), where the comparison may include taking an average, median, maximum, minimum, or some other comparison. Next, the processing circuitry may calculate an unambiguous but coarse estimate of the Doppler frequency shift associated with the target velocity based on the first frequency difference and the second frequency difference obtained from the FFT1 processing (710). The receiving circuitry may also apply averaging over pairs of up-chirps and pairs of down-chirps to increase the accuracy of the coarse estimate for the Doppler frequency shift, $f_D$, associated with the target. In some examples processing circuitry may apply averaging along with one or more of many different types of frequency-domain interpolation techniques to the received radar returns to improve the coarse estimate for $f_D$.

Next, the processing circuitry may calculate a fine but ambiguous estimate of Doppler frequency shift associated with the target (712). As described above, this disclosure includes a variety of techniques to calculate a fine, but unambiguous estimate of the Doppler frequency shift. For example, for the first approach, which may transmit and receive a plurality (two or more) triangular waveforms of up-chirps and down-chirps, the processing circuitry also uses all or a subset of up-chirps and/or down-chirps of the triangular waveform to calculate the fine, but ambiguous, estimate for the Doppler frequency shift. In some examples, averaging over a large enough number of triangular waveforms may result in a coarse estimate becoming a fine estimate, and in some examples, calculate a fine and unambiguous estimate of the Doppler frequency shift.

Another technique to determine a fine, but ambiguous estimate for the Doppler frequency shift includes the second approach described above. Rather than a single type of waveform with a single pulse repetition frequency, as in the first approach, the second approach may transmit a second type of waveform. This second waveform may include a triangular waveform, but with a different PRF than the pulse repetition frequency for the triangular waveform used to determine the coarse, unambiguous estimate of the Doppler frequency. In other examples, the second waveform may include a sawtooth or other waveform and may have linear modulation or some other type of modulation, as long as the modulation is consistent throughout this second waveform.

Next, the processing circuitry may calculate an unambiguous and accurate Doppler frequency shift associated with the target velocity by combining the unambiguous but coarse estimate of the Doppler frequency shift with the fine but ambiguous estimate of the Doppler frequency shift (714), e.g., according to equation [1]. For the second approach, with the two types of waveforms, combining the coarse and fine estimate of the Doppler frequency shift yields an unambiguous and accurate Doppler frequency shift estimate under the condition, $PRF$ multiplied by $T$ is more than $1 (PRF \cdot T > 1)$, where the PRF is for the second waveform and where T is the sampled (processed) duration of a single up-chirp or down-chirp of the first waveform used for the coarse estimate.

Finally, the processing circuitry may calculate the target velocity relative to the radar system based on the Doppler frequency shift estimate associated with the target (716). Alternatively, the processing circuitry, e.g., processing circuitry 330 of FIG. 4, may also calculate the unambiguous but coarse estimate of the target velocity relative to the radar system based on the unambiguous but coarse estimate of the Doppler frequency shift associated with the target, e.g., at step 710. Similarly, the processing circuitry may also calculate a fine but ambiguous estimate of the target velocity relative to the radar system based on the fine but ambiguous estimate of the Doppler frequency shift associated with the target, e.g., at step 712. Finally, the processing circuitry may alternatively calculate the fine and unambiguous target velocity relative to the radar system by combining the unambiguous but coarse estimate of the target velocity relative to the radar system and the fine but ambiguous estimate of the target velocity relative to the radar system, e.g., as shown by equation [3].

In one or more examples, the functions described above may be implemented in hardware, software, firmware, or any combination thereof. For example, the various components of FIGS. 1 and 4, such as processing circuitry 330, receiving circuitry and transmitting circuitry may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein, may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The techniques of this disclosure may also be described in the following examples.

Example 1: A radar system comprising radar transmitting circuitry configured to generate a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; radar receiving circuitry configured to: receive radar returns comprising the frequency-modulated output reflected from a target; process the received radar returns, wherein to process the received radar returns comprises: calculate a first frequency difference based on one or more first received radar returns comprising one or more pairs of transmitted and reflected up-chirps; calculate a second frequency difference based on one or more second received radar returns comprising one or more pairs of transmitted and reflected down-chirps; compare the first frequency difference to the second frequency difference; calculate an unambiguous but coarse estimate of a Doppler frequency shift associated with the target based on the first frequency difference and the second frequency difference; calculate a fine but ambiguous estimate of the Doppler frequency shift associated with the target; calculate a resolved Doppler frequency shift associated with the target by combining the unambiguous but coarse estimate of the Doppler frequency shift associated with the target and the fine but ambiguous estimate of the Doppler frequency shift associated with the target; calculate the target velocity relative to the radar system based on the resolved Doppler frequency shift associated with the target.

Example 2: The radar system of example 1, wherein to process the radar returns to calculate the first frequency difference, the second frequency difference and the fine but ambiguous estimate comprises applying analog filter banks to the received radar returns.

Example 3: The radar system of example 1, wherein to process the radar returns to: calculate the first frequency difference comprises to apply FFT1 to the one or more first received radar returns, calculate the second frequency difference comprises to apply FFT1 to the one or more second received radar returns; and calculate the fine but ambiguous estimate comprises to apply FFT2 to the received radar returns.

Example 4: The radar system of example 3, wherein the radar receiving circuitry is configured to apply FFT2 to two or more of the triangular waveforms.

Example 5: The radar system of any of examples 3 or 4, wherein to calculate the unambiguous but coarse estimate of the Doppler frequency shift from the first triangular waveform, the radar receiving circuitry is further configured to perform one or more of: interpolation around FFT1-magnitude peaks and averaging over several up-chirp and down-chirp pairs from the triangular waveform; wherein the interpolation improves the accuracy of the unambiguous but coarse estimate of the Doppler frequency shift.

Example 6: The radar system of any of examples 3 - 5, wherein the interpolation comprises at least one of: MacLeod interpolation, Lagrange interpolation, or another method of interpolation.

Example 7: The radar system of any of examples 3 - 6, wherein the radar transmitting circuitry is configured to transmit the triangular waveform with a pulse-repetition frequency, PRF; wherein the received radar returns to which the radar receiving circuity applies FFT2 is the triangular waveform formed by the first signal and the second signal, and wherein the interpolation by the radar receiving circuitry is configured to obtain the fine but ambiguous Doppler frequency shift estimate by enhancing the accuracy for the first frequency difference and for the second frequency difference to less than a value of the of the PRF for the triangular waveform that is processed with FFT2.

Example 8: The radar system of any of examples 3 through 7, wherein to apply FFT1 to the received radar returns comprises using a: a first chirp-sampling duration for the received up-chirps reflected from the target, and a second chirp-sampling duration for the received down-chirps reflected from the target, wherein the first chirp-sampling duration and the second chirp-sampling duration comprise a duration over which each chirp is sampled/processed for FFT1, wherein the first chirp-sampling duration equals the second chirp-sampling duration, and wherein the first chirp-sampling duration and the second chirp-sampling duration, is the chirp-sampling duration and is denoted with T.

Example 9: The radar system of example 8, wherein the radar transmitting circuitry is further configured to:

transmit a second waveform different from the first waveform; transmit the second waveform in time at one of: before the first waveform; after the first waveform; wherein the radar receiving circuitry is configured to apply FFT2 to the second waveform to calculate the fine but ambiguous Doppler frequency shift estimate.

Example 10: The radar system of any of examples 3 - 9, wherein the second waveform comprises a frequency-modulated output, wherein a pulse-repetition frequency, PRF, for the second waveform is different than for the first waveform; wherein the radar transmitting circuitry is configured to set the PRF for the second waveform to greater than the inverse of the chirp-sampling duration for the triangular waveform, 1/T, such that the radar transmitting circuitry transmits the first waveform and second waveforms to satisfy the condition: PRF T > 1.

Example 11: The radar system of any of examples 3 - 10, wherein the second waveform comprises one of: a sawtooth waveform composed of only up-chirps, a sawtooth waveform composed of only down-chirps, or a triangular waveform composed of up-chirp/down-chirp pairs.

Example 12: The radar system of any of examples 3 through 11, wherein, to process the received radar returns, the radar receiving circuitry is further configured to: calculate a corresponding unambiguous but coarse target velocity estimate, $v_c$, based on the unambiguous but coarse Doppler frequency shift estimate; calculate a corresponding fine but ambiguous target velocity estimate, $v_f$, based on the fine but ambiguous Doppler frequency shift estimate; and calculate the target velocity with wherein $v_c$ and $v_f$ are the unambiguous and coarse velocity estimate and the fine but ambiguous velocity estimate, respectively, obtained from the unambiguous but coarse Doppler frequency shift estimate and from the fine but ambiguous Doppler frequency shift estimate as described above, and is a maximum possible velocity of the target, unambiguously measured with radar returns that include the waveform with pulse-repetition frequency PRF that is processed with FFT2 to obtain the fine but ambiguous velocity estimate.

Example 13: A method comprising generating, by radar transmitting circuitry of a radar system, a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; receiving, by receiving circuitry of the radar system, radar returns comprising calculating a first frequency difference based on one or more first received radar returns comprising one or more pairs of transmitted and reflected up-chirps; and calculating a second frequency difference based on one or more second received radar returns comprising one or more pairs of transmitted and reflected down-chirps; comparing the first frequency difference to the second frequency difference; calculating an unambiguous but coarse estimate of a Doppler frequency shift associated with the target based on the result of the above comparison; calculating a fine but ambiguous estimate of the Doppler frequency shift associated with the target; calculating a resolved Doppler frequency shift associated with the target by combining the unambiguous but coarse estimate of the Doppler frequency shift associated with the target and the fine but ambiguous estimate of the Doppler frequency shift associated with the target; calculating the target velocity relative to the radar system based on the resolved Doppler frequency shift associated with the target.

Example 14: The method of example 13, wherein processing the radar returns comprising calculating the first frequency difference comprises applying FFT1 to the one or more first received radar returns, calculating the second frequency difference comprises applying FFT1 to the one or more second received radar returns; and calculating the fine but ambiguous estimate comprises applying FFT2 to the received radar returns.

Example 15: The method of examples 13 and 14, wherein the radar transmitting circuitry is configured to transmit the triangular waveform with a pulse-repetition frequency, PRF; wherein the received radar returns to which the radar receiving circuity applies FFT2 is the triangular waveform formed by the first signal and the second signal, and wherein the interpolation by the radar receiving circuitry is configured to obtain the fine but ambiguous Doppler frequency shift estimate by enhancing the accuracy for the first frequency difference and for the second frequency difference to less than a value of the of the PRF for the triangular waveform that is processed with FFT2.

Example 16: The method of any of examples 13 - 15, wherein to apply FFT1 to the received radar returns comprises using a: a first chirp-sampling duration for the received up-chirps reflected from the target, and a second chirp-sampling duration for the received down-chirps reflected from the target, wherein the first chirp-sampling duration and the second chirp-sampling duration comprise a duration over which each chirp is sampled/processed for FFT1, wherein the first chirp-sampling duration equals the second chirp-sampling duration, wherein the first chirp-sampling duration and the second chirp-sampling duration, is the chirp-sampling duration and is denoted with T, wherein the radar transmitting circuitry is further configured to: transmit a second waveform different from the first waveform; transmit the second waveform in time at one of: before the first waveform; after the first waveform; wherein the radar receiving circuitry is configured to apply FFT2 to the second waveform to calculate the fine but ambiguous Doppler frequency shift estimate.

Example 17: A non-transitory computer-readable storage medium comprising instructions that, when executed, cause one or more processors of a computing device to: control transmitting circuitry of a radar system to generate a frequency-modulated output comprising an up-chirp, wherein an up-chirp comprises a first signal with a frequency that linearly increases over a first duration; a down-chirp, wherein a down-chirp comprises a second signal with a frequency that linearly decreases over a second duration, and wherein the radar transmitting circuitry is configured to transmit the down-chirp in time at one of: before the up-chirp, after the up-chirp or in parallel with the up-chirp; wherein the first signal and the second signal form a triangular waveform; control receiving circuitry of the radar system to receive radar returns comprising the frequency-modulated output reflected from a target; process the received radar returns to resolve Doppler ambiguity in the received radar returns, wherein resolving the Doppler ambiguity comprises: calculate a first frequency difference based on one or more first received radar returns comprising one or more pairs of transmitted and reflected up-chirps; calculate a second frequency difference based on one or more second received radar returns comprising one or more pairs of transmitted and reflected down-chirps; compare the first frequency difference to the second frequency difference; calculate an unambiguous but coarse estimate of a Doppler frequency shift associated with the target based on the first frequency difference and the second frequency difference; calculate a fine but ambiguous estimate of the Doppler frequency shift associated with the target; calculate a resolved Doppler frequency shift associated with the target by combining the unambiguous but coarse estimate of the Doppler frequency shift associated with the target and the fine but ambiguous estimate of the Doppler frequency shift associated with the target; calculate the target velocity relative to the radar system based on the resolved Doppler frequency shift associated with the target.

Example 18: The non-transitory computer-readable storage medium of example 17, wherein to process the radar returns to: calculate the first frequency difference comprises to apply FFT1 to the one or more first received radar returns, calculate the second frequency difference comprises to apply FFT1 to the one or more second received radar returns; and calculate the fine but ambiguous estimate comprises to apply FFT2 to the received radar returns.

Example 19: The non-transitory computer-readable storage medium of any of examples 17 and 18, wherein the instructions cause the processor to control the radar receiving circuitry to calculate the target velocity with wherein $v_c$ and $v_f$ are the unambiguous and coarse velocity estimate and the fine but ambiguous velocity estimate, respectively, obtained from the unambiguous but coarse Doppler frequency shift estimate and from the fine but ambiguous Doppler frequency shift estimate as described above, and is a maximum velocity of the target, unambiguously measured with radar returns that include the waveform with pulse-repetition frequency PRF that is processed with FFT2 to obtain the fine but ambiguous velocity estimate.

Example 20: The non-transitory computer-readable storage medium of any of examples 17 - 19, wherein to apply FFT1 to the received radar returns comprises using a: a first chirp-sampling duration for the received up-chirps reflected from the target, and a second chirp-sampling duration for the received down-chirps reflected from the target, wherein the first chirp-sampling duration and the second chirp-sampling duration comprise a duration over which each chirp is sampled/processed for FFT1, wherein the first chirp-sampling duration equals the second chirp-sampling duration, wherein the first chirp-sampling duration and the second chirp-sampling duration, is the chirp-sampling duration and is denoted with T, wherein the radar transmitting circuitry is further configured to: transmit a second waveform different from the first waveform; transmit the second waveform in time at one of: before the first waveform; after the first waveform; wherein the radar receiving circuitry is configured to apply FFT2 to the second waveform to calculate the fine but ambiguous Doppler frequency shift estimate.

Various examples of the disclosure have been described. These and other examples are within the scope of the following claims.

## Claims

1. A radar system comprising:

   radar transmitting circuitry configured to generate a frequency-modulated output comprising:

   an up-chirp, wherein an up-chirp comprises a first signal with a frequency that linearly increases over a first duration; and
   a down-chirp,

   wherein a down-chirp comprises a second signal with a frequency that linearly decreases over a second duration,
   wherein the radar transmitting circuitry is configured to transmit the down-chirp in time at one of: before the up-chirp, after the up-chirp or in parallel with the up-chirp; and
   wherein the first signal and the second signal form a triangular waveform;

   radar receiving circuitry configured to:

   receive radar returns comprising the frequency-modulated output reflected from a target;

process the received radar returns, wherein to process the received radar returns comprises:

calculate a first frequency difference based on one or more first received radar returns comprising one or more pairs of transmitted and reflected up-chirps;
calculate a second frequency difference based on one or more second received radar returns comprising one or more pairs of transmitted and reflected down-chirps;
compare the first frequency difference to the second frequency difference;
calculate an unambiguous but coarse estimate of a Doppler frequency shift associated with the target based on the first frequency difference and the second frequency difference;
calculate a fine but ambiguous estimate of the Doppler frequency shift associated with the target;
calculate a resolved Doppler frequency shift associated with the target by combining the unambiguous but coarse estimate of the Doppler frequency shift associated with the target and the fine but ambiguous estimate of the Doppler frequency shift associated with the target; and
calculate a target velocity for the target relative to the radar system based on the resolved Doppler frequency shift associated with the target.

2. The radar system of claim 1, wherein to process the radar returns to calculate the first frequency difference, the second frequency difference and the fine but ambiguous estimate comprises applying analog filter banks to the received radar returns.

3. The radar system of claim 1, wherein to process the radar returns to:

calculate the first frequency difference comprises to apply FFT1 to the one or more first received radar returns,
calculate the second frequency difference comprises to apply FFT1 to the one or more second received radar returns; and
calculate the fine but ambiguous estimate comprises to apply FFT2 to the received radar returns.

4. The radar system of any of claim 1 or 3, wherein the radar receiving circuitry is configured to apply FFT2 to two or more of the triangular waveforms.

5. The radar system of any of claims 3 or 4,

wherein to calculate the unambiguous but coarse estimate of the Doppler frequency shift from the first triangular waveform, the radar receiving circuitry is further configured to perform one or more of:

interpolation around FFT1-magnitude peaks and
averaging over several up-chirp and down-chirp pairs from the triangular waveform; and

wherein the interpolation improves accuracy of the unambiguous but coarse estimate of the Doppler frequency shift.

6. The radar system of any of claims 3 - 5, wherein the interpolation comprises at least one of: MacLeod interpolation, Lagrange interpolation, or another method of interpolation.

7. The radar system of any of claims 3 - 5,

wherein the radar transmitting circuitry is configured to transmit the triangular waveform with a pulse-repetition frequency, *PRF;*
wherein the received radar returns to which the radar receiving circuitry applies FFT2 is the triangular waveform formed by the first signal and the second signal, and
wherein the interpolation by the radar receiving circuitry is configured to obtain the unambiguous but coarse Doppler frequency shift estimate by enhancing the accuracy for the first frequency difference and for the second frequency difference to less than a value of the of the PRF for the triangular waveform that is processed with FFT2.

8. The radar system of any of claims 3 - 7,

wherein to apply FFT1 to the received radar returns comprises using a:

a first chirp-sampling duration for the received up-chirps reflected from the target, and
a second chirp-sampling duration for the received down-chirps reflected from the target,

wherein the first chirp-sampling duration and the second chirp-sampling duration comprise a duration over which each chirp is sampled/processed for FFT1,
wherein the first chirp-sampling duration equals the second chirp-sampling duration, and
wherein the first chirp-sampling duration and the second chirp-sampling duration, is denoted with *T*.

9. The radar system of any of claims 3 - 8,

wherein the radar transmitting circuitry is further configured to:

transmit a second waveform different from the first waveform; and
transmit the second waveform in time at one of:

before the first waveform;
after the first waveform; and

wherein the radar receiving circuitry is configured to apply FFT2 to the second waveform to calculate the fine but ambiguous Doppler frequency shift estimate.

10. The radar system of any of claims 3 - 9,

wherein the second waveform comprises a frequency-modulated output,
wherein a pulse-repetition frequency, *PRF,* for the second waveform is different than for the first waveform; and
wherein the radar transmitting circuitry is configured to set the *PRF* for the second waveform to greater than an inverse of the chirp-sampling duration for the triangular waveform, *1/T*, such that the radar transmitting circuitry transmits the first waveform and second waveforms to satisfy: *PRF·T > 1.*

11. The radar system of any of claims 3 - 10, wherein the second waveform comprises one of:

a sawtooth waveform composed of only up-chirps,
a sawtooth waveform composed of only down-chirps, or
a triangular waveform composed of up-chirp/down-chirp pairs.

12. The radar system of any of claims 3 - 11, wherein, to process the received radar returns, the radar receiving circuitry is further configured to:

calculate a corresponding unambiguous but coarse target velocity estimate, $v_c$, based on the unambiguous but coarse Doppler frequency shift estimate;
calculate a corresponding fine but ambiguous target velocity estimate, $v_f$, based on the fine but ambiguous Doppler frequency shift estimate; and
calculate the target velocity with

$$v = v_c + round\left[\frac{v_c - v_f}{2v_{f,max}}\right] * 2v_{f,max},$$

wherein $v_c$ and $v_f$ are the unambiguous and coarse velocity estimate and the fine but ambiguous velocity estimate, respectively, obtained from the unambiguous but coarse Doppler frequency shift estimate and from the fine but ambiguous Doppler frequency shift estimate as described above, and $v_{f,max} = \dfrac{\lambda \cdot PRF}{4}$ is a maximum possible velocity of the target, unambiguously measured with radar returns with pulse-repetition frequency *PRF.*

13. A method comprising:

generating, by radar transmitting circuitry of a radar system, a frequency-modulated output comprising:

an up-chirp, wherein an up-chirp comprises a first signal with a frequency that linearly increases over a first duration; and
a down-chirp,

wherein a down-chirp comprises a second signal with a frequency that linearly decreases over a second duration,
wherein the radar transmitting circuitry is configured to transmit the down-chirp in time at one of: before the up-chirp, after the up-chirp or in parallel with the up-chirp, and
wherein the first signal and the second signal form a triangular waveform;

receiving, by receiving circuitry of the radar system, radar returns comprising the frequency-modulated output reflected from a target;
processing the received radar returns, wherein processing the received radar returns comprises:

calculating a first frequency difference based on one or more first received radar returns comprising one or more pairs of transmitted and reflected up-chirps;
calculating a second frequency difference based on one or more second received radar returns comprising one or more pairs of transmitted and reflected down-chirps;
comparing the first frequency difference to the second frequency difference;
calculating an unambiguous but coarse estimate of a Doppler frequency shift associated with the target based on the above comparison;
calculating a fine but ambiguous estimate of the Doppler frequency shift associated with the target;
calculating a resolved Doppler frequency shift associated with the target by combining the unambiguous but coarse estimate of the Doppler frequency shift associated with the target and the fine but ambiguous estimate of the Doppler frequency shift associated with the target; and
calculating a target velocity for the target relative to the radar system based on the resolved Doppler frequency shift associated with the target.

14. The method of claim 13, wherein processing the radar returns comprising:

calculating the first frequency difference comprises applying FFT1 to the one or more first received radar returns,
calculating the second frequency difference comprises applying FFT1 to the one or more second received radar returns; and
calculating the fine but ambiguous estimate comprises applying FFT2 to the received radar returns,
wherein the radar transmitting circuitry is configured to transmit the triangular waveform with a pulse-repetition frequency, *PRF;*
wherein the received radar returns to which the radar receiving circuitry applies FFT2 is the triangular waveform formed by the first signal and the second signal, and
wherein the interpolation by the radar receiving circuitry is configured to obtain the unambiguous but coarse Doppler frequency shift estimate by enhancing accuracy for the first frequency difference and for the second frequency difference to less than a value of the of the PRF for the triangular waveform that is processed with FFT2.

15. The method of claim 14,

wherein to apply FFT1 to the received radar returns comprises using a:

a first chirp-sampling duration for the received up-chirps reflected from the target, and
a second chirp-sampling duration for the received down-chirps reflected from the target,

wherein the first chirp-sampling duration and the second chirp-sampling duration comprise a duration over which each chirp is sampled/processed for FFT1,
wherein the first chirp-sampling duration equals the second chirp-sampling duration,
wherein the first chirp-sampling duration and the second chirp-sampling duration, is denoted with *T*,
wherein the radar transmitting circuitry is further configured to:

transmit a second waveform different from the first waveform;
transmit the second waveform in time at one of:

before the first waveform;
after the first waveform;

wherein the radar receiving circuitry is configured to apply FFT2 to the second waveform to calculate the fine but ambiguous Doppler frequency shift estimate;

wherein the second waveform comprises a frequency-modulated output,

wherein a pulse-repetition frequency, $PRF$, for the second waveform is different than for the first waveform, and wherein the radar transmitting circuitry is configured to set the $PRF$ for the second waveform to greater than an inverse of the chirp-sampling duration for the triangular waveform, $1/T$, such that the radar transmitting circuitry transmits the first waveform and second waveforms to satisfy: $PRF \cdot T > 1$.

120

TRANSMIT
104

BAND GAP
106

PCB
LAYERS
118

RECEIVE
ARRAY
108

TX BEAM
114

REFLECTED
ENERGY
116

TARGET
112

FIG. 1

FIG. 2A

FIG. 2B

FIG. 3

$$\frac{1}{T} \leq PRF \quad or \quad T \geq \frac{1}{PRF}$$

EP 4 261 564 A1

300

ANTENNA 3<u>02</u>

TX 3<u>26</u>

RX 3<u>22</u>

PROCESSING
CIRCUITRY
<u>330</u>

MEMORY
DEVICE
<u>332</u>

USER
INTERFACE
<u>334</u>

FIG. 4

$T=204.8\ \mu s;\ PRF=2\ KHz;\ PRF\cdot T=0.4096<1$

FIG. 5A

$T=204.8\ \mu s;\ PRF=2\ KHz;\ PRF\cdot T=0.4096<1$

FIG. 5B

$\Delta f_{D,c}=4.8828$ KHz; $PRF2=4.8877$ KHz; $PRF2/\Delta f_{D,c}=1.001$

**FIG. 5C**

$T=204.8$ μs; $PRF=4.8877$ KHz; $PRF \cdot T=1.001 > 1$

**FIG. 5D**

$\Delta$ waveform, 16 chirps; $T$=204.8 $\mu s$; $PRF$=2 KHz; $PRF \cdot T$=0.4096< 1; $v_{f,max}$=6.1307 m/s; $SNR = 0$ dB

**FIG. 6A**

FIG. 6B

GENERATE, BY TRANSMITTING CIRCUITRY OF A RADAR SYSTEM, A FREQUENCY MODULATED OUTPUT COMPRISING A FIRST SIGNAL WITH A FREQUENCY THAT LINEARLY INCREASES OVER A FIRST DURATION AND A SECOND SIGNAL WITH A FREQUENCY THAT LINEARLY DECREASES OVER A SECOND DURATION — 700

RECEIVE, BY RECEIVING CIRCUITRY OF THE RADAR SYSTEM, RADAR RETURNS COMPRISING THE FREQUENCY MODULATED OUTPUT REFLECTED FROM A TARGET — 702

CALCULATE A FIRST FREQUENCY DIFFERENCE BASED ON ONE OR MORE FIRST RECEIVED RADAR RETURNS COMPRISING ONE OR MORE REFLECTED SIGNALS WITH THE FREQUENCY THAT LINEARLY INCREASES — 704

CALCULATE A SECOND FREQUENCY DIFFERENCE BASED ON ONE OR MORE SECOND RECEIVED RADAR RETURNS COMPRISING ONE OR MORE REFLECTED SIGNALS WITH THE FREQUENCY THAT LINEARLY DECREASES — 706

COMPARE THE FIRST FREQUENCY DIFFERENCE TO THE SECOND FREQUENCY DIFFERENCE — 708

A

**FIG. 7A**

**A**

CALCULATE THE COARSE ESTIMATE OF THE DOPPLER FREQUENCY ASSOCIATED WITH THE TARGET BASED ON THE FIRST FREQUENCY DIFFERENCE AND THE SECOND FREQUENCY DIFFERENCE — 710

CALCULATE THE FINE ESTIMATE OF THE DOPPLER FREQUENCY SHIFT ASSOCIATED WITH THE TARGET — 712

CALCULATE THE DOPPLER FREQUENCY ASSOCIATED WITH THE TARGET BY COMBINING THE COARSE ESTIMATE OF THE DOPPLER FREQUENCY WITH THE FINE ESTIMATE OF THE DOPPLER FREQUENCY — 714

CALCULATE THE TARGET VELOCITY RELATIVE TO THE RADAR SYSTEM BASED ON THE DOPPLER FREQUECY ASSOCIATED WITH THE TARGET — 716

**FIG. 7B**

Europäisches
Patentamt

European
Patent Office

Office européen
des brevets

# EUROPEAN SEARCH REPORT

**Application Number**

EP 23 16 3678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/109169 A1 (WINTER KLAUS [DE] ET AL) 25 May 2006 (2006-05-25) | 1-15 | INV.<br>G01S7/35 |
| Y | * paragraphs [0001] - [0006], [0027] - [0030], [0057] - [0059], [0064], [0065], [0091], [0092]; figures 2,5,6,15 * | 5-7,14, 15 | G01S13/34<br>G01S13/58<br>G01S13/91<br>G01S13/933 |
| | ----- | | |
| X | US 2009/121915 A1 (RANDLER MARTIN [DE] ET AL) 14 May 2009 (2009-05-14) | 1-15 | |
| Y | * paragraphs [0002], [0006] - [0008], [0027], [0031] - [0034]; figures 1,4-6 * | 5-7,14, 15 | |
| | ----- | | |
| X | US 2018/356511 A1 (BUDDENDICK HERMANN [DE] ET AL) 13 December 2018 (2018-12-13) | 1-15 | |
| Y | * paragraphs [0003] - [0005], [0013], [0023] - [0026], [0028]; figures 1-3 * | 5-7,14, 15 | |
| | ----- | | |
| Y | DE 10 2020 210079 B3 (CONTI TEMIC MICROELECTRONIC GMBH [DE]) 19 August 2021 (2021-08-19) * paragraphs [0041], [0054] * | 5-7,14, 15 | |
| | ----- | | |

TECHNICAL FIELDS SEARCHED (IPC)

G01S

The present search report has been drawn up for all claims

| Place of search | Date of completion of the search | Examiner |
|---|---|---|
| Munich | 29 August 2023 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 3678

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2023

| Patent document cited in search report | | Publication date | Patent family member(s) | | Publication date |
|---|---|---|---|---|---|
| US 2006109169 | A1 | 25-05-2006 | DE | 10243811 A1 | 01-04-2004 |
| | | | EP | 1554602 A1 | 20-07-2005 |
| | | | JP | 4377334 B2 | 02-12-2009 |
| | | | JP | 2005539237 A | 22-12-2005 |
| | | | US | 2006109169 A1 | 25-05-2006 |
| | | | WO | 2004029650 A1 | 08-04-2004 |
| US 2009121915 | A1 | 14-05-2009 | DE | 102004047087 A1 | 30-03-2006 |
| | | | EP | 1797448 A1 | 20-06-2007 |
| | | | US | 2009121915 A1 | 14-05-2009 |
| | | | WO | 2006034894 A1 | 06-04-2006 |
| US 2018356511 | A1 | 13-12-2018 | CN | 109031271 A | 18-12-2018 |
| | | | DE | 102017209628 A1 | 13-12-2018 |
| | | | JP | 7174537 B2 | 17-11-2022 |
| | | | JP | 2019049521 A | 28-03-2019 |
| | | | US | 2018356511 A1 | 13-12-2018 |
| DE 102020210079 | B3 | 19-08-2021 | CN | 116075745 A | 05-05-2023 |
| | | | CN | 116194801 A | 30-05-2023 |
| | | | DE | 102020210079 B3 | 19-08-2021 |
| | | | EP | 4193186 A1 | 14-06-2023 |
| | | | WO | 2022033638 A1 | 17-02-2022 |
| | | | WO | 2022033639 A1 | 17-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 06189422
- US 63362869